# EUROPEAN PATENT APPLICATION

(11) **EP 3 321 542 A1**
(43) Date of publication of application: **16.05.2018**
(21) Application number: 16821383.3
(22) Date of filing: 04.07.2016
(51) Int. Cl.: F16H 55/36, F16H 55/48

(54) **FRICTION PULLEY**

(30) Priority: 06.07.2015 JP 2015135349; 19.08.2015 JP 2015161930
(71) Applicant: NOK Corporation, Tokyo 105-8585 (JP)
(72) Inventor: ITO Sosuke, Fujisawa-shi Kanagawa 251-0042 (JP); YANAGI Tokunori, Makinohara-shi Shizuoka 421-0532 (JP); INOUE Masahiko, Fujisawa-shi Kanagawa 251-0042 (JP)
(74) Representative: Prüfer & Partner mbB Patentanwälte · Rechtsanwälte
(86) International application number: PCT/JP2016/069792
(87) International publication number: WO 2017/006914

(57) **Abstract**

To provide a friction pulley which can transmit a high torque. A friction pulley (1) includes: a rotary wheel (10) which has a groove (11) on an outer periphery thereof, the groove (11) being recessed toward an inner periphery side, the rotary wheel (10) being rotatable about an axis (x); and a rubber ring (20) having an annular shape and being made of rubber that is formed so as to be capable of being accommodated in the groove (11) of the rotary wheel (10), the rubber ring (20). The groove (11) has a rectangular cross section. In a free state where the rubber ring (20) is not accommodated in the groove (11) of the rotary wheel (10), the rubber ring (20) has a rectangular cross-sectional shape corresponding to the groove (11) of the rotary wheel (10). In an attached state where the rubber ring (20) is accommodated in the groove (11) of the rotary wheel (10), the rubber ring (20) is compressed by the groove (11) in the direction of an axis (x) so that friction surfaces (22) of the rubber ring (20) are pressed against facing side surfaces (12) of the groove (11).

## Description

### Technical Field

The present invention relates to a friction pulley, and particularly relates to a friction pulley used for transmitting power in a vehicle or in an industrial machine.

### Background Art

In an internal combustion engine of a vehicle, a pulley or a belt is used in a power transmission mechanism for transmitting power of a crankshaft to accessories such as a water pump. A conventional power transmission mechanism is configured such that a crankshaft and all accessories are connected with each other by a belt and a pulley so that power is transmitted to all accessories from the crankshaft. Accordingly, in an internal combustion engine having such a power transmission mechanism, the loss of generated energy is large. On the other hand, recently, a power transmission mechanism is proposed which has a structure with which connection and disconnection between a crankshaft and accessories can be selected (for example, see Patent Literatures 1 or 2).

Patent Literature 1 discloses a power transmission mechanism including: a pulley which is attached to a crankshaft and around which a belt is wound; a friction pulley having a support disk attached to a water pump and a friction wheel mounted on an outer periphery of the support disk and made of an elastomeric material; and an idler pulley which enables connection and separation between these pulley and friction pulley. In the conventional power transmission mechanism, the idler pulley is brought into contact with respective pulleys of the crankshaft and the water pump so that the crankshaft and the water pump are connected with each other. Alternatively, the idler pulley is separated from the respective pulleys so that the connection between the crankshaft and the water pump is disconnected. In this manner, a power transmission path can be selected.

### Document List

### Patent Literatures

Patent Literature 1: International Publication No. WO 2006/051094
Patent Literature 2: International Publication No. WO 2014/038554

### Summary of Invention

### Technical Problem

However, in the friction pulley in the above-mentioned conventional power transmission mechanism where the power transmission path can be selected, the friction wheel is mounted on the outer periphery of the support disk in a cylindrical shape and a joining strength between the friction wheel and the support disk is not high. Accordingly, when transmitting a high torque, the joining between the friction wheel and the support disk may fail and the friction wheel and the support disk may separate from each other. When the friction wheel and the support disk are separate from each other, a force for coupling the friction wheel and the support disk with each other is lost and there is a possibility that the friction wheel separates from the support disk and thus deflects at a rear side of a torque transmission portion and the friction wheel may come off from the support disk. Accordingly, in a motor or the like which is used for starting an internal combustion engine which requires transmission of a high torque of 80 to 100 Nm, the above-mentioned friction pulley cannot be used. For this reason, conventionally, there is a need for a structure of a friction pulley which can transmit a high torque.

The present invention has been made in view of the above-mentioned drawbacks, and it is an object of the present invention to provide a friction pulley which can transmit a high torque.

### Solution to Problem

To achieve the above-mentioned object, the friction pulley according to the present invention is a friction pulley for transmitting power in a state where an outer periphery of the friction pulley is in pressure contact with a rotary member which rotates, and the friction pulley is characterized by including: a rotary wheel having a groove on an outer periphery of the rotary wheel, the groove being recessed toward an inner periphery side, the rotary wheel being rotatable about an axis; and a rubber ring having in an annular shape and being made of rubber, the rubber ring being capable of being accommodated in the groove of the rotary wheel, wherein the groove has a pair of side surfaces opposite each other in a direction of the axis, each of the pair of side surfaces having an annular shape and extending from an inner peripheral side toward an outer peripheral side, and the rubber ring is accommodated in the groove, the rubber ring having a contact surface on an outer periphery of the rubber ring and friction surfaces that are a pair of surfaces corresponding to a pair of side surfaces of the groove, the contact surface being configured to be brought into pressure contact with the rotary member so as to transmit power, and, at least in a power transmission state where the contact surface is in pressure contact with the rotary member so as to transmit power, the friction surfaces of the rubber ring are pushed against the side surfaces of the groove.

In the friction pulley according to one aspect of the present invention, also in a non-power transmission state where the contact surface is not in pressure contact with the rotary member, the rubber ring is accommodated in the groove with the friction surfaces being pushed against the side surfaces of the groove.

In the friction pulley according to one aspect of the present invention, in a state where the rubber ring is not accommodated in the groove, a distance between the friction surfaces of the rubber ring is at least partially greater than a distance between the corresponding side surfaces of the groove, and the rubber ring is accommodated in the groove in a state of being pressed against the side surfaces of the groove.

In the friction pulley according to one aspect of the present invention, the groove has a bottom surface extending between the side surfaces on the inner peripheral side, and a distance between the side surfaces is constant, and the rubber ring has a bottom surface which is a surface extending between the friction surfaces on the inner peripheral side, a distance between the friction surfaces is constant in a state where the rubber ring is not accommodated in the groove, and the bottom surface of the rubber ring abuts on the bottom surface of the groove.

In the friction pulley according to one aspect of the present invention, the groove has a bottom surface extending between the side surfaces on the inner peripheral side, and a distance between the pair of side surfaces increases from the inner peripheral side toward the outer peripheral side, and the rubber ring has a bottom surface which is a surface extending between the friction surfaces on the inner peripheral side, a distance between the friction surfaces increases from the inner peripheral side toward the outer peripheral side in a state where the rubber ring is not accommodated in the groove, and the bottom surface of the rubber ring abuts on the bottom surface of the groove.

In the friction pulley according to one aspect of the present invention, the groove has a bottom surface extending between the side surfaces on the inner peripheral side, and a distance between the pair of side surfaces increases from the inner peripheral side toward the outer peripheral side, the rubber ring has a bottom surface which is a surface extending between the friction surfaces on the inner peripheral side, and a distance between the friction surfaces increases from the inner peripheral side toward the outer peripheral side in a state where the rubber ring is not accommodated in the groove, and in the non-power transmission state where the contact surface is not in pressure contact with the rotary member, a space is formed between the bottom surface of the rubber ring and the bottom surface of the groove.

In the friction pulley according to one aspect of the present invention, each of the friction surface and the side surface is a conical surface.

The friction pulley according to one aspect of the present invention includes a plurality of the rubber rings, and the rotary wheel includes a plurality of the grooves, the number of the plurality of the grooves being equal to the number of the plurality of the rubber rings, and the plurality of the rubber rings are accommodated in the plurality of the grooves, respectively.

In the friction pulley according to one aspect of the present invention, the rotary wheel is formed of a plurality of disk shaped split bodies extending from the axis toward the outer periphery, and the groove is formed by making the split bodies overlap with each other in a direction of the axis.

To achieve the above-mentioned object, the friction pulley according to the present invention is characterized in that the friction pulley includes: a base body including a first base body portion which extends in the outer peripheral direction with respect to the axis; and a second base body portion which extends in the outer peripheral direction with respect to the axis; and a rubber ring having an annular shape and being made of rubber, which is attached to a portion of the base body on the outer peripheral side, and has an outer peripheral surface having an annular shape. The first base body portion has an outer peripheral surface having an annular shape and, on a side surface of the first base body portion on one side in the direction of the axis, the first base body portion has a stepped portion having an annular shape and extending along the outer peripheral surface. The second base body portion has an outer peripheral surface having an annular shape and, on a side surface of the second base body portion on one side in the direction of the axis, the second base body portion has a stepped portion having an annular shape extending along the outer peripheral surface. In the base body, the side surface of the first base body portion on the one side and the side surface of the second base body portion on the one side are opposite each other. On the outer peripheral side of the base body, the stepped portion of the first base body portion and the stepped portion of the second base body portion are opposite each other and forms a groove having an annular shape. A width of the groove of the base body in the direction of the axis is smaller than a width of the rubber ring in the direction of the axis. The rubber ring is compressed and gripped by the groove of the base body such that an outer peripheral surface of the rubber ring is positioned more on the outer peripheral side than the outer peripheral surface of the first base body portion and the outer peripheral surface of the second base body portion.

In the friction pulley according to one aspect of the present invention, the stepped portion of the first base body portion has an inclined surface which is a surface having an annular shape which is inclined. The inclined surface is formed into a conical surface shape where a diameter increases from the one side toward another side in the direction of the axis. The stepped portion of the second base body portion has an inclined surface which is a surface having an annular shape which is inclined. The inclined surface is formed into a conical surface shape where a diameter increases from the one side toward another side in the direction of the axis. In the base body, the inclined surface of the first base body portion opposes the inclined surface of the second base body portion.

In the friction pulley according to one aspect of the present invention, the rubber ring has a first side surface having a conical surface shape on the side of the first base body portion, and has a second side surface having a conical surface shape on the side of the second base body portion. The first side surface and the second side surface are formed so as to approach each other toward the inner peripheral side. The first side surface and the second side surface of the rubber ring are respectively brought into pressure contact with the inclined surface of the first base body portion and the inclined surface of the second base body portion.

In the friction pulley according to one aspect of the present invention, the first side surface of the rubber ring is parallel to the inclined surface of the first base body portion, and the second side surface of the rubber ring is parallel to the inclined surface of the second base body portion.

In the friction pulley according to one aspect of the present invention, the outer peripheral surface of the first base body portion is a cylindrical surface centered on the axis, the outer peripheral surface of the second base body portion is a cylindrical surface centered on the axis, and the outer peripheral surface of the rubber ring is a cylindrical surface centered on the axis.

In the friction pulley according to one aspect of the present invention, the base body includes fixing means for fixing the first base body portion and the second base body portion of the base body in a non-movable manner in the direction of the axis.

### Effects of Invention

According to a friction pulley of the present invention, a high torque can be transmitted.

### Brief Description of Drawings

[Fig. 1] Figs. 1(a) and 1(b) are views showing a schematic configuration of a friction pulley according to a first embodiment of the present invention, wherein Fig. 1(a) is a side view of the friction pulley, and Fig. 1(b) is a cross-sectional view of the friction pulley in a cross section taken along an axis x.
[Fig. 2] Fig. 2 is a partially enlarged view of a cross section of the friction pulley shown in Figs. 1(a) and 1(b).
[Fig. 3] Fig. 3 is a cross-sectional view of a rubber ring of the friction pulley shown in Figs. 1(a) and 1(b) along an axis and in a free state where the rubber ring is not accommodated in a groove of a rotary wheel.
[Fig. 4] Fig. 4 is a cross-sectional view of the friction pulley shown in Figs. 1(a) and 1(b) in a power transmission state.
[Fig. 5] Fig. 5 is a cross-sectional view showing a schematic configuration of a friction pulley according to a second embodiment of the present invention along an axis of the friction pulley.
[Fig. 6] Fig. 6 is a cross-sectional view of a rubber ring of the friction pulley shown in Fig. 5 showing a cross section along the axis in a free state where the rubber ring is not accommodated in a groove of a rotary wheel.
[Fig. 7] Fig. 7 is a cross-sectional view of the friction pulley shown in Fig. 5 in a power transmission state.
[Fig. 8] Fig. 8 is a cross-sectional view showing a schematic configuration of a friction pulley according to a third embodiment of the present invention along an axis of the friction pulley.
[Fig. 9] Fig. 9 is a cross-sectional view showing a schematic configuration of a variant of the friction pulley shown in Fig. 8.
[Fig. 10] Fig. 10 is a cross-sectional view of a friction pulley according to a fourth embodiment of the present invention in a cross section along an axis for showing a schematic configuration of the friction pulley.
[Fig. 11] Fig. 11 is an exploded cross-sectional view of the friction pulley according to the fourth embodiment of the present invention along an axis in which respective constituent elements of the friction pulley are illustrated separate from each other.
[Fig. 12] Fig. 12 is a cross-sectional view showing a schematic configuration of a friction pulley according to a fifth embodiment of the present invention along an axis of the friction pulley.
[Fig. 13] Fig. 13 is a cross-sectional view showing a schematic configuration of a variant of the friction pulley according to the fifth embodiment of the present invention shown in Fig. 12 along an axis of the friction pulley.
[Fig. 14] Fig. 14 is cross-sectional a view showing a schematic configuration of another variant of the friction pulley according to the fifth embodiment of the present invention shown in Fig. 12 along an axis of the friction pulley.
[Fig. 15] Fig. 15(a) is a cross-sectional view of a rubber ring in a free state along an axis for schematically showing a variant of the rubber ring shown in Fig. 6, and Fig. 15(b) is a cross-sectional view of a rubber ring in a free state along an axis for schematically showing a variant of the rubber ring shown in Fig. 11.

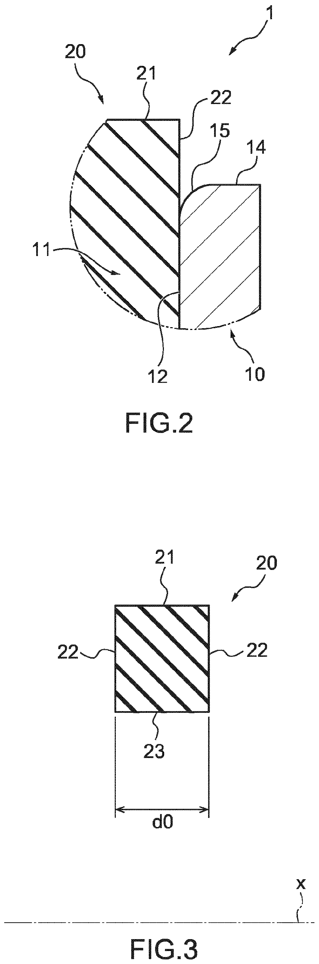

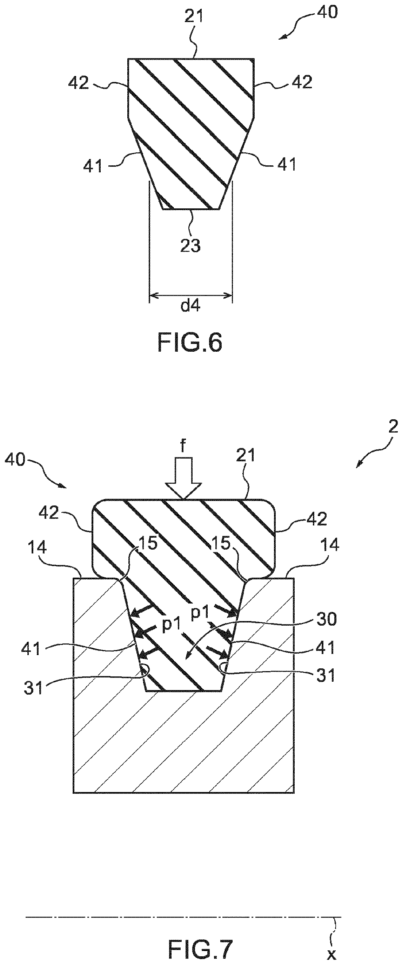

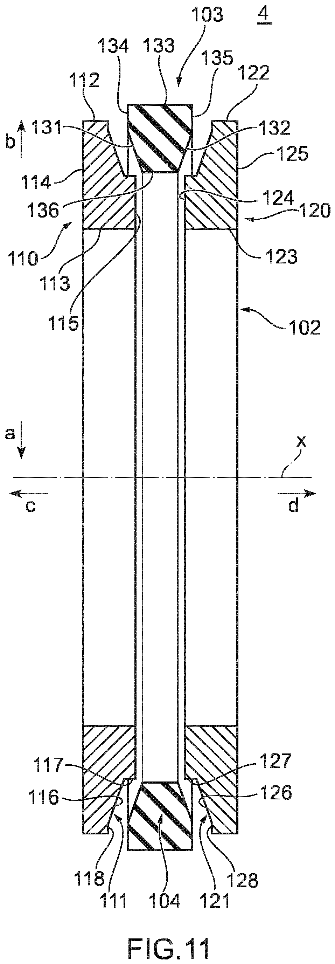

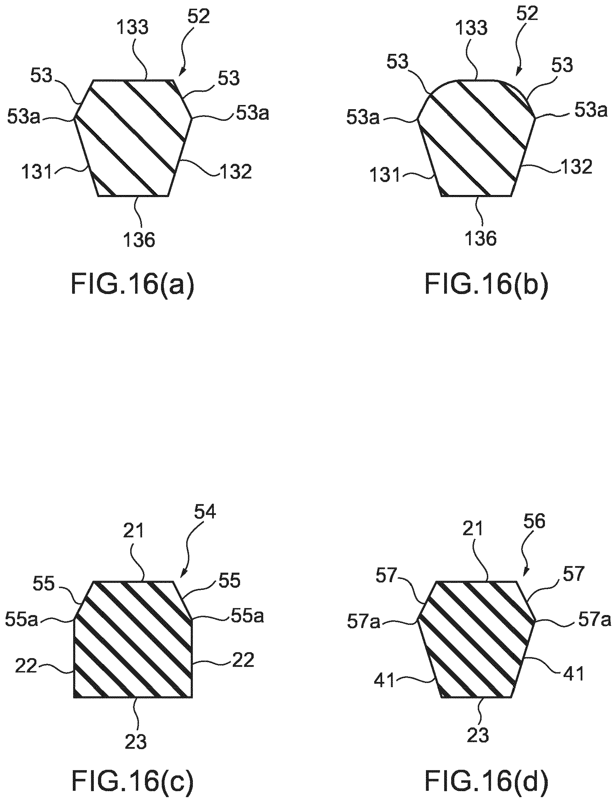

[Fig. 16] Fig. 16(a) is a cross-sectional view of a rubber ring in a free state along the axis for schematically showing a variant of the rubber ring shown in Fig. 11. Fig. 16(b) is a cross-sectional view of a rubber ring in a free state along the axis for schematically showing another variant of the rubber ring shown in Fig. 11. Fig. 16(c) is a cross-sectional view of a rubber ring in a free state along the axis for schematically showing a variant of the rubber ring shown in Fig. 3. Fig. 16(d) is a cross-sectional view of a rubber ring in a free state along the axis for schematically showing a variant of the rubber ring shown in Fig. 6.
[Fig. 17] Fig. 17(a) is an exploded partial cross-sectional view of a variant of the friction pulley according to the fourth embodiment of the present invention including the rubber ring shown in Fig. 16(a) illustrated along the axis and with respective constituent elements of the friction pulley being separate from each other. Fig. 17(b) is an exploded partial cross-sectional view of a variant of the friction pulley according to the fourth embodiment of the present invention including the rubber ring shown in Fig. 16(a) illustrated along the axis and in a power transmission state.

### Description of Embodiments

Hereinafter, embodiments of the present invention will be described with reference to drawings.

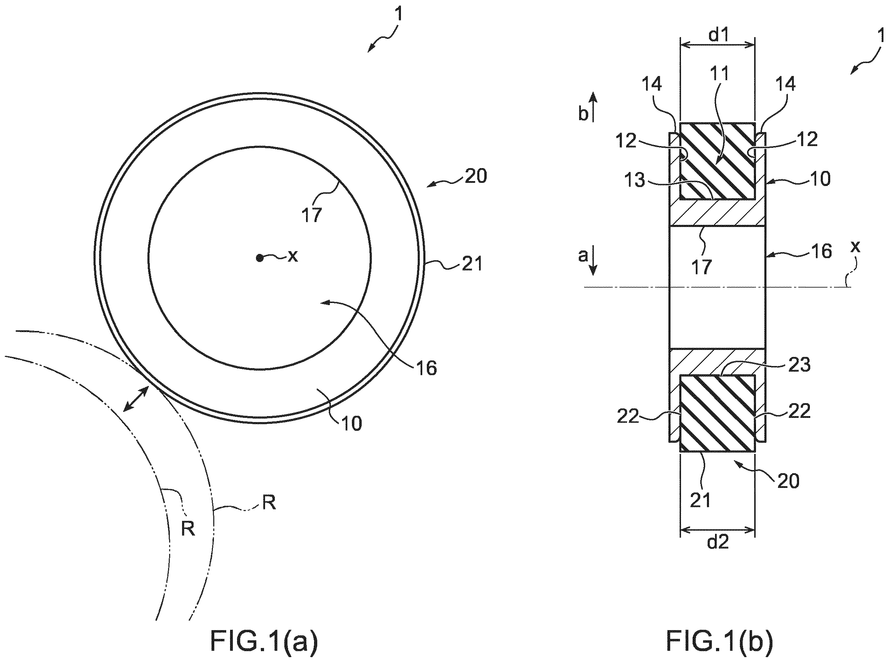

Figs. 1(a) and 1(b) are views showing a schematic configuration of a friction pulley 1 according to a first embodiment of the present invention, wherein Fig. 1(a) is a side view of the friction pulley 1, and Fig. 1(b) is a cross-sectional view of the friction pulley 1 in a cross section along an axis x. The friction pulley 1 according to the first embodiment of the present invention is used for transmitting power in a state where an outer periphery of the friction pulley 1 is in pressure contact with a rotary member which rotates. The friction pulley 1 is used in an internal combustion engine of a vehicle, for example, such that the outer periphery of the friction pulley 1 is directly brought into pressure contact with a pulley attached to a crankshaft and functioning as a rotary member, or is brought into pressure contact with a timing belt wound around the pulley and functioning as a rotary member so as to transmit power of a motor to the crankshaft thus starting the internal combustion engine. The friction pulley 1 may also be used for transmitting power of the crankshaft to an accessory such as a water pump, or for transmitting power between an accessory and an accessory. Further, using a drive device or a biasing member such as a spring, the friction pulley 1 may be attached so as to be selectively movable between a power transmission state in which the friction pulley 1 is disposed at a position where the friction pulley 1 is in pressure contact with the rotary member so that the friction pulley 1 can transmit power, and a non-power transmission state in which the friction pulley 1 is disposed at a position where the friction pulley 1 is not in pressure contact with the rotary member so that the friction pulley 1 does not transmit power.

As shown in Figs. 1(a) and 1(b), the friction pulley 1 includes a rotary wheel 10 and a rubber ring 20. The rotary wheel 10 has a groove 11 on an outer periphery thereof, the groove 11 being a groove recessed toward an inner periphery side (in a direction indicated by an arrow "a" in Fig. 1(b)), and is rotatable about the axis x. The rubber ring 20 has an annular shape and is made of rubber, and formed so as to be capable of being accommodated in the groove 11 of the rotary wheel 10. The groove 11 has a pair of side surfaces 12 facing each other in the direction of the axis x, and each of the pair of side surfaces 12 has an annular shape and extends from an inner peripheral side toward an outer peripheral side. In the friction pulley 1, the rubber ring 20 is accommodated in the groove 11.

The rubber ring 20 has a contact surface 21 at an outer periphery thereof and friction surfaces 22. The contact surface 21 is a portion brought into pressure contact with a rotary member R so as to transmit power. The friction surfaces 22 are a pair of surfaces corresponding to the pair of side surfaces 12 of the groove 11. The friction surfaces 22 are disposed to face away from each other in the direction of the axis x. When the friction pulley 1 is in a use state so as to transmit power, the contact surface 21 is in pressure contact with the rotary member R so as to transmit power. At least in the power transmission state, the friction surfaces 22 of the rubber ring 20 are pushed against the side surfaces 12 of the groove 11.

Even in the non-power transmission state where the contact surface 21 is not in pressure contact with the rotary member R, the rubber ring 20 may be accommodated in the groove 11 with the friction surfaces 22 pushed against the side surfaces 12 of the groove 11 respectively. In this case, in a state where the rubber ring 20 is not accommodated in the groove 11 so that an external force is not applied to the rubber ring 20 (hereinafter referred to as "free state"), a distance d0 between the friction surfaces 22 of the rubber ring 20 (see Fig. 1(b) and Fig. 3) is greater than a distance d1 between the side surfaces 12 of the groove 11. Accordingly, the rubber ring 20 is accommodated in the groove 11 in a state where the friction surfaces 22 are pressed against the side surfaces 12 of the groove 11.

The groove 11 also has a bottom surface 13 which is a surface extending between the side surfaces 12 on the inner peripheral side. The distance d1 between the side surfaces 12 is constant. The rubber ring 20 has a bottom surface 23 which is a surface extending between the friction surfaces 22 on the inner peripheral side. In the free state, the distance d0 between the friction surfaces 22 is constant (see Fig. 3). In the friction pulley 1, the bottom surface 23 of the rubber ring 20 abuts on the bottom surface 13 of the groove 11.

To be more specific, the rotary wheel 10 is a disk-shaped or cylindrical member centered on the axis x and having a predetermined width in the direction of the axis x. The rotary wheel 10 has, on the outer periphery thereof, the groove 11 having an annular shape and recessed toward the inner peripheral side. As shown in Fig. 1(b), the groove 11 has a rectangular shape in a cross section along the axis x (hereinafter also simply referred to as "cross section"). Each side surface 12 is a circular annular shaped flat surface extending in a direction orthogonal to the axis x (in a direction indicated by an arrow "b" in Fig. 1(b)) from the inner peripheral side toward the outer peripheral side. The pair of side surfaces 12 of the groove 11 face each other in the direction of the axis x and extend parallel to each other. The distance d1 between the pair of side surfaces 12 is constant over a range from the inner peripheral side toward the outer peripheral side. The bottom surface 13 of the groove 11 forms a cylindrical surface centered on the axis x.

Further, as shown in Fig. 2, which is a partially enlarged view of a cross section of the friction pulley 1, in the rotary wheel 10, a transition surface 15 is a surface that connects each of outer peripheral surfaces 14 having a cylindrical surface shape, which is an end surface of the rotary wheel 10 on the outer peripheral side, and each of the side surfaces 12. The transition surface 15 is a curved surface. The transition surface 15 is, for example, formed by round chamfering the connection portion between the side surface 12 and the outer peripheral surface 14.

Further, the rotary wheel 10 has, as shown in Figs. 1(a) and 1(b), a through hole 16 extending in the direction of the axis x more on the inner peripheral side than the groove 11 so that the rotary wheel 10 has an inner peripheral surface 17 which is a cylindrical surface centered on the axis x. A shaft of a motor not shown in the drawing or a member attached to the shaft is fitted in or fixed by being press-fitted in the through hole 16. Depending on a use method of the friction pulley 1, an attaching member or the like (shaft or the like) of a device or a structure or the like of an accessory or the like of an internal combustion engine in which the friction pulley 1 is used is fitted in or fixed by being press fitted to the through hole 16 of the rotary wheel 10. The fixing is performed by known means not shown in the drawing such as a bolt or a nut. When the friction pulley 1 is used as an idler pulley, a rotary shaft is inserted through the through hole 16 of the rotary wheel 10. Alternatively, a bearing is attached on the through hole 16 of the rotary wheel 10. Further, when the through hole 16 is not used as a hole for supporting the rotation of the rotary wheel 10 but is used as a hole for fixing, the through hole 16 may not be formed about the axis x. Alternatively, the plurality of through holes 16 may be formed in the rotary wheel 10. The through hole 16 has a shape which conforms to an object on which the friction pulley 1 is attached. On the other hand, the rotary wheel 10 may be formed of a solid member which has no through hole 16.

In the free state where the rubber ring 20 is not accommodated in the groove 11 of the rotary wheel 10, as shown in Fig. 3, the rubber ring 20 has a rectangular cross-sectional shape corresponding to the groove 11 of the rotary wheel 10. The friction surfaces 22 correspond to the side surfaces 12 of the groove 11, and each friction surface 22 is a flat surface having a circular annular shape which extends in a direction orthogonal to the axis x from the inner peripheral side toward the outer peripheral side. The pair of friction surfaces 22 are disposed to face away from each other in the direction of the axis x, and extend parallel to each other. The distance d0 between the pair of friction surfaces 22 is constant over a range from the inner peripheral side toward the outer peripheral side. The contact surface 21 extends between the pair of friction surfaces 22 on the outer peripheral side, and is a cylindrical surface centered on the axis x. The bottom surface 23 of the friction surface 22 is also a cylindrical surface centered on the axis x.

In the free state, the distance d0 between the friction surfaces 22 of the rubber ring 20 is greater than the distance d1 between the side surfaces 12 of the groove 11 (d0>d1). As shown in Fig. 1(b), in an attached state where the rubber ring 20 is accommodated in the groove 11 of the rotary wheel 10, the rubber ring 20 is compressed in the direction of the axis x by the groove 11 and thus the friction surfaces 22 of the rubber ring 20 are pressed against the side surfaces 12 of the groove 11 that are facing each other. In the attached state, the rubber ring 20 is compressed until a distance between the friction surfaces 22 becomes a distance d2 from the distance d0. As described above, in the friction pulley 1 in the non-power transmission state, the friction surfaces 22 of the rubber ring 20 accommodated in the groove 11 of the rotary wheel 10 are pushed against the side surfaces 12 of the groove 11. Further, in the attached state, the bottom surface 23 of the rubber ring 20 is in contact with the bottom surface 13 of the groove 11. The bottom surface 23 of the rubber ring 20 may be in contact with the bottom surface 13 of the groove 11 with a tightening force tensing the bottom surface 13 of the groove 11.

Further, as shown in Figs. 1(a) and 1(b), the contact surface 21 of the rubber ring 20 projects from the outer peripheral surface 14 of the rotary wheel 10 toward the outer peripheral side.

The rotary wheel 10 is made of metal or a resin. Further, various rubber materials can be used as a rubber material forming the rubber ring 20, and a rubber material having a physical property that meets the requirement is selected. The rubber material forming the rubber ring 20 may be, for example, nitrile rubber (NBR), hydrogenated nitrile rubber (H-NBR), ethylene-propylene rubber (EPDM), styrene-butadiene rubber (SBR), natural rubber (NR), or urethane rubber. The rubber ring 20 is attached to the rotary wheel 10 such that, for example, a rubber ring 20, which is temporarily molded to have a size (radius) allowing the rubber ring 20 to be accommodated in the groove 11 of the rotary wheel 10, is accommodated in the groove 11 of the rotary wheel 10 and, then, the rubber ring 20 is molded so as to constrict to a desired size by secondary vulcanization. Alternatively, the rubber ring 20 is molded into a final shape and, thereafter, is attached to the rotary wheel 10 in a state of being accommodated in the groove 11 of the rotary wheel 10 while being elastically deformed by stretching.

Next, the manner of operation and advantageous effects of the friction pulley 1 having the above-mentioned configuration are described.

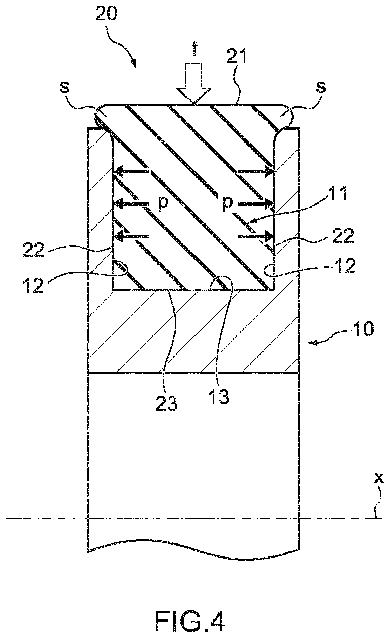

In the power transmission state, as shown in Fig. 1(a), the friction pulley 1 is pushed against the rotary member R. To be more specific, the contact surface 21, which is an outer peripheral surface of the rubber ring 20, is pushed against the rotary member R thus being brought into pressure contact with the rotary member R so that power is transmitted to the rotary member R, or power of the rotary member R is transmitted. At this stage of operation, as shown in Fig. 4, the rubber ring 20 is pressed in the inner peripheral direction by a pressing force f at a contact portion of the contact surface 21 with the rotary member R. With such a pressing force f, in the groove 11, the rubber ring 20 is compressed in the inner peripheral direction thus deforming and expanding in the direction of the axis x. Due to the deformation of the rubber ring 20 in the direction of the axis x caused by the pressing force f, the friction surfaces 22 of the rubber ring 20 are further pushed against the side surfaces 12 of the groove 11. Accordingly, in addition to a pushing force, which is generated in the non-power transmission state and is applied to the side surfaces 12, a pushing force p is newly generated on the friction surfaces 22. As described above, when the friction pulley 1 is in the power transmission state, a pushing force generated on the friction surfaces 22 of the rubber ring 20 is greater than a pushing force for pushing the friction surfaces 22 to the side surfaces 12 of the groove 11, which is generated on the friction surfaces 22 in the non-power transmission state where the contact surface 21 of the rubber ring 20 is not pressed. Accordingly, when the friction pulley 1 is in the power transmission state, a large frictional force can be generated between the friction surfaces 22 of the rubber ring 20 and the side surfaces 12 of the groove 11. With such a configuration, compared to an adhesive force conventionally acquired by an adhesive agent, a frictional force generated between the rubber ring 20 and the groove 11 can be increased. Accordingly, in the power transmission state, sliding of the rubber ring 20 on the groove 11 can be suppressed, and thus it is possible to suppress displacement of the rubber ring 20 in the outer peripheral direction in the groove 11 and deflection of the rubber ring 20. With the suppression of the deflection of the rubber ring 20, the sliding between the rubber ring 20 and the rotary wheel 10 is suppressed and the generation of heat between the rubber ring 20 and the rotary wheel 10 can be suppressed, whereby durability of the rubber ring 20 can be enhanced.

Further, in the power transmission state, when the contact surface 21 of the rubber ring 20 is pressed, as shown in Fig. 4, portions (portions "s" in Fig. 4) on the outer peripheral side of the friction surfaces 22 of the rubber ring 20, which project from the groove 11, deform and project sideward. At this stage, proximal end portions of the projecting portions s of the rubber ring 20 are pushed against the transition surfaces 15, each of is the transition surfaces 15 being disposed between the side surface 12 of the groove 11 of the rotary wheel 10 and the outer peripheral surface 14. The transition surface 15 of the rotary wheel 10, against which the proximal end portion of the projecting portion s of the rubber ring 20 is pushed, is a curved surface as described above (see Fig. 2) so that the proximal end portion of the projecting portion s of the rubber ring 20 can move (deform) to the outside along the transition surface 15. Accordingly, due to the deformation of the rubber ring 20 in the power transmission state, it is possible to suppress that the rubber ring 20 has a large stress at the proximal end portions of the projecting portions s of the rubber ring 20, which are pushed against the transition surfaces 15, and hence, cracks or breakage of the rubber ring 20 can be prevented.

Further, by adjusting the relationship between the distance d0 between the friction surfaces 22 of the rubber ring 20 and the distance d1 between the side surfaces 12 of the groove 11, a magnitude of a slip torque, at which the rubber ring 20 of the friction pulley 1 starts to slip with respect to the rotary wheel 10, can be easily adjusted. Accordingly, by setting a slip torque in accordance with a device to which the friction pulley 1 is attached, it is possible to prevent an excessively large torque from being applied to the device, whereby the device to which the friction pulley 1 is attached can be prevented from being damaged.

In the friction pulley 1, the rubber ring 20 is not adhered to the rotary wheel 10 by an adhesive agent. The type of rubber material which can be used for forming the rubber ring 20 is not limited for ensuring adhesion strength, and hence, the rubber ring 20 can be prepared with various rubber materials, thus increasing the choices for a rubber material for forming the rubber ring 20.

As described above, according to the friction pulley 1 of the first embodiment of the present invention, a high torque can be transmitted.

In the non-power transmission state, the rubber ring 20 may not be compressed in the direction of the axis x in the groove 11. That is, in the free state, the distance d0 between the friction surfaces 22 of the rubber ring 20 may be smaller than the distance d1 between the side surfaces 12 of the groove 11 (d0<d1) and, in the non-power transmission state, the friction surfaces 22 of the rubber ring 20 may not be pushed against the side surfaces 12 of the groove 11 in the groove 11 (d2=d0) (see Fig. 1(b), Fig. 3). In this case, however, the distance d0 between the friction surfaces 22 is set with respect to the distance d1 between the side surfaces 12 such that, in the power transmission state, due to the deformation of the rubber ring 20 caused by the pressing force f applied to the contact surface 21 of the rubber ring 20, the friction surfaces 22 of the rubber ring 20 are pushed against the side surfaces 12 of the groove 11 so that a desired pushing force p is generated on the friction surfaces 22. Further, a shape of the contact surface 21 of the rubber ring 20 is not limited to a flat surface, but may be a curved surface. Alternatively, a shape of the contact surface 21 of the rubber ring 20 may have, in cross section, a curved profile, for example, an arc-shaped profile. In the same manner, a shape of the bottom surface 23 of the rubber ring 20 or a shape of the bottom surface 13 of the groove 11 is not limited to a flat surface, and may be a curved surface.

Further, a surface property such as surface roughness or surface hardness or a dimension of the side surfaces 12 of the groove 11, or a shape of the side surfaces 12 may be set such that a desired frictional force is generated between the rotary wheel 10 and the rubber ring 20. The bottom surface 13 of the groove 11 may also be set to have a surface property substantially equal to the surface property of the side surface 12. In the groove 11, the side surfaces 12 and the bottom surface 13 may have the same surface property, or may have different surface properties. For example, the side surfaces 12 of the groove 11 may have a large surface roughness, and the bottom surface 13 of the groove 11 may have an extremely small surface roughness such as a surface roughness of a mirror surface.

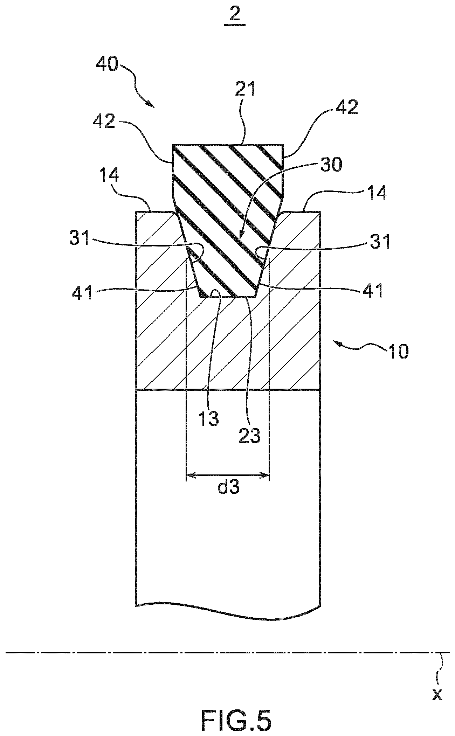

Next, a friction pulley 2 according to a second embodiment of the present invention is described. Fig. 5 is a view showing a schematic configuration of the friction pulley 2 according to the second embodiment of the present invention, and is also a cross-sectional view of the friction pulley 2 showing a cross section along the axis. Hereinafter, configurations identical or similar to the configurations of the above-mentioned friction pulley 1 according to the first embodiment of the present invention are given the same symbols, and description of such configurations is omitted. Only parts which make the present embodiment different from the first embodiment are described.

The friction pulley 2 according to the present embodiment includes a groove 30 and a rubber ring 40 having cross-sectional shapes different from the cross-sectional shapes of the groove 11 of the rotary wheel 10 and the rubber ring 20 of the friction pulley 1 according to the above-mentioned first embodiment. As shown in Fig. 5, a cross-sectional shape of the groove 30 of the rotary wheel 10 is a substantially V shape, and a cross-sectional shape of the rubber ring 40 has a portion in a substantially V shape corresponding to the groove 30.

To be more specific, as shown in Fig. 5, different from the side surfaces 12 of the groove 11 of the above-mentioned friction pulley 1, a pair of side surfaces 31 of the groove 30 of the rotary wheel 10 are configured such that a distance d3 between the pair of side surfaces 31 increases from the inner peripheral side toward the outer peripheral side. To be more specific, each side surface 31 is a surface having a conical surface shape in an annular shape centered on the axis x so that the distance d3 between the pair of side surfaces 31 in the direction of the axis x increases from the inner peripheral side toward the outer peripheral side, and increases at a constant rate.

Fig. 6 is a cross-sectional view of the rubber ring 40 in the free state along the axis x. Different from the friction surfaces 22 of the rubber ring 20 of the above-mentioned friction pulley 1, as shown in Fig. 6, a pair of friction surfaces 41 of the rubber ring 40 are configured to correspond to the side surfaces 31 of the groove 30 such that a distance d4 between the friction surfaces 41 increases from the inner peripheral side toward the outer peripheral side. To be more specific, each friction surface 41 is a surface having an annular conical surface shape centered on the axis x, and the distance d4 between the pair of friction surfaces 41 in the direction of the axis x increases from the inner peripheral side toward the outer peripheral side, and increases at a constant rate.

An included angle between the friction surfaces 41 may be equal to or different from an included angle between the side surfaces 31 of the groove 31. In the present embodiment, as shown in Fig. 5, the included angle between the friction surfaces 41 is equal to the included angle between the side surfaces 31 of the groove 30. Further, in a state where the rubber ring 40 is accommodated in the groove 30 of the rotary wheel 10, the rubber ring 40 is compressed in the direction of the axis x with the friction surfaces 41 in contact with the side surfaces 31 of the groove 30 and the friction surfaces 41 are uniformly compressed along the side surfaces 31. In the free state, the distance d4 between the friction surfaces 41 of the rubber ring 40 is greater than the distance d3 between the side surfaces 31 of corresponding portions of the groove 30. When the friction pulley 2 is in the non-power transmission state, the friction surfaces 41 of the rubber ring 40, which is accommodated in the groove 30 of the rotary wheel 10, are pushed against the entire side surfaces 31 of the groove 30.

Further, as shown in Fig. 6, the rubber ring 40 has projecting surfaces 42 each of which is a surface connecting an end portion of each friction surface 41 on the outer peripheral side and an end portion of the contact surface 21 in the direction of the axis x. As shown in Fig. 5, in the non-power transmission state, the projecting surfaces 42 project from the groove 30 on the outer peripheral side and, in the friction pulley 2, the projecting surfaces 42 are positioned more on the outer peripheral side than the outer peripheral surface 14 of the rotary wheel 10. In the non-power transmission state, portions of the friction surfaces 41 on the side of an outer peripheral end portion may also project from the groove 30 on the outer peripheral side, or the friction surfaces 41 may not project from the groove 30 on the outer peripheral side. Each projecting surface 42 is, for example, a surface having an annular disk surfaced shape. Further, in the attached state, the bottom surface 23 of the rubber ring 40 is in contact with the bottom surface 13 of the groove 30. The bottom surface 23 of the rubber ring 40 may be in contact with the bottom surface 13 of the groove 30 with a tightening force tensing the bottom surface 13 of the groove 30.

Next, the manner of operation and advantageous effects of the friction pulley 2 having the above-mentioned configuration are described.

When the friction pulley 2 is in the power transmission state, as shown in Fig. 7, the rubber ring 40 is pressed in the inner peripheral direction by a pressing force f at a contact portion of the contact surface 21 with the rotary member R. With such a pressing force f, in the groove 30, the rubber ring 40 is compressed in the inner peripheral direction thus deforming and expanding in the direction of the axis x. Due to the deformation of the rubber ring 40 in the direction of the axis x caused by the pressing force f, the friction surfaces 41 of the rubber ring 40 are further pushed against the side surfaces 31 of the groove 30. Accordingly, in addition to a pushing force which is generated in the non-power transmission state and applied to the side surfaces 31, a further pushing force is generated on the friction surfaces 41. As described above, in addition to a pushing force which is generated in the non-power transmission state and applied to the side surfaces 31, a further pushing force is generated on the friction surfaces 41.

Further, the pair of side surfaces 31 of the groove 30 extends obliquely toward the inner peripheral side such that the distance d3 between the pair of side surfaces 31 decreases. With pushing by the pressing force f, the rubber ring 40 is pushed into a narrower portion of the groove 30 and hence, the rubber ring 40 is further compressed, whereby a pushing force is further generated on the friction surfaces 41. As described above, when the friction pulley 2 is in the power transmission state, on the friction surfaces 41 of the rubber ring 40, in addition to a pushing force that pushes the friction surfaces 41 to the side surfaces 31 of the groove 30, which is generated on the friction surfaces 41 in the non-power transmission state where the contact surfaces 21 of the rubber ring 40 are not pressed, a pushing force p1 is newly generated, which is greater than the pressing force p generated on the friction surfaces 22 of the above-mentioned friction pulley 1 which is generated by the pressing force f. Accordingly, in the friction pulley 2, a pushing force greater than the pushing force that is generated on the friction surfaces 22 of the friction pulley 1 and applied to the side surfaces 12 can be generated on the friction surfaces 41.

Further, the side surfaces 31 of the groove 30 are inclined with respect to the direction orthogonal to the axis x. Accordingly, assuming the groove 11 and the groove 30 have the same depth in the radial direction, an area of the side surface 31 of the groove 30 can be made greater as compared to an area of the side surface 11 of the groove 11.

As described above, in the friction pulley 2, as compared to the friction pulley 1 according to the above-mentioned first embodiment, a pushing force that is generated on the friction surfaces 41 and applied to the side surfaces 31 can be increased and, at the same time, an area of the side surfaces 31 of the groove 30 can be increased. Accordingly, when the friction pulley 2 is in the power transmission state, a frictional force greater than a frictional force in the friction pulley 1 can be generated between the friction surfaces 41 of the rubber ring 40 and the side surfaces 31 of the groove 30. With such a configuration, in the power transmission state, sliding of the rubber ring 40 on the groove 30 can be further suppressed, and thus it is possible to further suppress displacement of the rubber ring 40 in the outer peripheral direction in the groove 30 and deflection of the rubber ring 40.

Further, in the power transmission state, when the contact surface 21 of the rubber ring 40 is pressed, as shown in Fig. 7, the projecting surfaces 42 of the rubber ring 40, or the projecting surfaces 42 and portions of the friction surfaces 41 on the outer peripheral side deform and project sideward. Also in the friction pulley 2, in the same manner as the friction pulley 1, each transition surface 15 between the side surface 31 of the rotary wheel 10 and the outer peripheral surface 14 is a curved surface (see Fig. 7). Accordingly, due to the deformation of the rubber ring 40 in the power transmission state, it is possible to suppress that the rubber ring 40 has a large stress at portions thereof which are pushed against the transition surfaces 15, and hence, cracks or breakage of the rubber ring 40 can be prevented.

As described above, according to the friction pulley 2 of the second embodiment of the present invention, a high torque can be transmitted.

The included angle between the friction surfaces 41 of the rubber ring 40 may be greater than the included angle between the side surfaces 31 of the groove 30, or may be smaller than the included angle between the side surfaces 31. In this case, in the non-power transmission state, the friction surfaces 41 of the rubber ring 40 need not be in contact with the entire side surfaces 31 of the groove 30, but may be partially in contact with the side surfaces 31 at portions thereof on the inner peripheral side or on the outer peripheral side so that a pushing force applied to the side surfaces 31 may be partially generated at the portions of the friction surfaces 41 on the inner peripheral side or on the outer peripheral side. Further, in this case, the distance d4 between the friction surfaces 41 is set with respect to the distance d3 between the side surfaces 31 such that, in the power transmission state, the rubber ring 40 is compressed by a pressing force of the rotary member R so that the friction surfaces 41 are pushed against the entire side surfaces 31 of the groove 30, whereby a desired pushing force p1 is generated on the friction surfaces 41.

Further, in the non-power transmission state, the rubber ring 40 need not be compressed in the direction of the axis x in the groove 30. That is, in the free state, the distance d4 between the friction surfaces 41 of the rubber ring 40 may be smaller than the distance d3 between the side surfaces 31 of the corresponding portions of the groove 30 (d4<d3) and, in the non-power transmission state, the friction surfaces 41 of the rubber ring 40 need not be pushed against the side surfaces 31 of the groove 30 in the groove 30 (see Figs. 5 and 6). In this case, however, the distance d4 between the friction surfaces 41 is set with respect to the distance d3 between the side surfaces 31 such that, in the power transmission state, due to the deformation of the rubber ring 40 caused by the pressing force f applied to the contact surface 21 of the rubber ring 40, the friction surfaces 41 of the rubber ring 40 are pushed against the side surfaces 31 of the groove 30 so that a desired pushing force p1 is generated on the friction surfaces 41.

Further, the side surfaces 31 of the groove 30 and the friction surfaces 41 of the rubber ring 40 may not have a conical surface shape as described above, and may be a curved surface, for example, a curved surface recessed toward the outside or a curved surface projecting toward the inside. Further, a shape of the contact surface 21 of the rubber ring 40 is not limited to a flat surface, but may be a curved surface. Alternatively, a shape of the contact surface 21 of the rubber ring 40 may have, in cross section, a curved profile, for example, an arc-shaped profile. In the same manner, a shape of the bottom surface 23 of the rubber ring 40 or a shape of the bottom surface 13 of the groove 30 is not limited to a flat surface, but may be a curved surface.

Further, the side surfaces 31 of the groove 30 and the friction surfaces 41 of the rubber ring 40 may have a shape in which the distances d3, d4 gradually increase from the outer peripheral side toward the inner peripheral side. In this case, it is possible to achieve advantageous effects that are substantially equal to the above-mentioned advantageous effects and, at the same time, depending on a shape of the rubber ring 40, it is possible to prevent the rubber ring 40 from being easily removed from the groove 30. Further, the rubber ring 40 need not have the projecting surfaces 42.

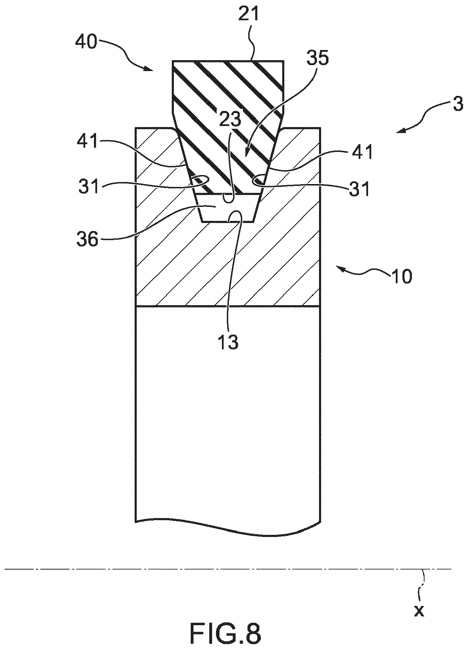

Next, a friction pulley 3 according to a third embodiment of the present invention is described. Fig. 8 is a view showing a schematic configuration of the friction pulley 3 according to the third embodiment of the present invention, and is also a cross-sectional view of the friction pulley 3 showing a cross section along the axis. Hereinafter, configurations identical or similar to the configurations of the above-mentioned friction pulley 2 according to the second embodiment of the present invention are given the same symbols, and description of such configurations is omitted. Only parts which make the present embodiment different from the second embodiment are described.

The friction pulley 3 according to the present embodiment has a groove 35 different from the groove 30 of the rotary wheel 10 of the friction pulley 2 according to the above-mentioned second embodiment. As shown in Fig. 8, in the non-power transmission state, the bottom surface 13 of the groove 35 of the rotary wheel 10 does not abut on the bottom surface 23 of the rubber ring 40. In the groove 35, a space 36 having an annular shape is formed between the bottom surface 13 of the groove 35 and the bottom surface 23 of the rubber ring 40.

Next, the manner of operation of the friction pulley 3 having the above-mentioned configuration are described.

When the friction pulley 3 is in the power transmission state and the contact surface 21 of the rubber ring 40 is pressed in the inner peripheral direction by a pressing force f from the rotary member R (see Fig. 7), the rubber ring 40 deforms in the direction of the axis x. In addition, since the space 36 is formed below the rubber ring 40, the rubber ring 40 is compressed and deforms to enter the space 36. Accordingly, as compared to the rubber ring 40 of the friction pulley 2, the rubber ring 40 is pushed into a narrower portion of the groove 30 by the pressing with a pressing force f. Accordingly, in the friction pulley 3, a pushing force can be generated on the friction surface 41, which is further greater than the pushing force which is generated on the friction surfaces 41 of the above-mentioned friction pulley 2 and applied to the side surfaces 31.

As described above, in the friction pulley 3, as compared to the friction pulley 2, a pushing force which is generated on the friction surfaces 41 and applied to the side surfaces 31 can be increased. Accordingly, when the friction pulley 3 is in the power transmission state, a frictional force greater than a frictional force in the friction pulley 2 can be generated between the friction surfaces 41 of the rubber ring 40 and the side surfaces 31 of the groove 35.

As described above, according to the friction pulley 3 of the third embodiment of the present invention, a high torque can be transmitted.

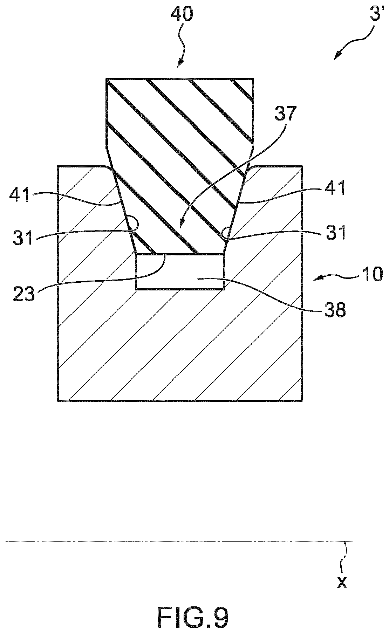

Next, a modification of the friction pulley 3 according to the above-mentioned third embodiment of the present invention is described. Fig. 9 is a cross-sectional view showing a schematic configuration of a friction pulley 3' according to the modification of the friction pulley 3 according to the third embodiment of the present invention. As shown in Fig. 9, the friction pulley 3' has a groove 37 different from the groove 35 of the above-mentioned friction pulley 3. To be more specific, in the groove 37 of the friction pulley 3', a space 38 having a shape different from a shape of the space 36 in the groove 35 of the friction pulley 3 is formed.

As shown in Fig. 9, the groove 37 is formed so as to define the space 38 between the groove 37 and the bottom surface 23 of the rubber ring 40 in the non-power transmission state. The space 38 has a rectangular cross-sectional shape. A portion of the groove 37 which corresponds to the space 38 is defined by: a pair of surfaces having an annular shape facing each other, which extend from end portions of the side surfaces 31 of the groove 37 on the inner peripheral side toward the axis x; and a surface connected to end portions of the pair of surfaces having an annular shape on the inner peripheral side. Surfaces of the groove 37 defining a portion which corresponds to the space 38 are, for example, a pair of flat surfaces having a circular annular shape which extend in the direction orthogonal to the axis x, and a curved surface having a cylindrical surface shape which is connected to end portions of the pair of flat surfaces having a circular annular shape on the inner peripheral side and extends in the direction of the axis x.

According to the friction pulley 3' of the modification of the friction pulley 3 according to the present third embodiment, in the power transmission state, a portion on the distal end side of the rubber ring 40, which is pressed toward the inner peripheral side beyond the side surfaces 31 of the groove 37, enters the space 38 and hence, different from the above-mentioned friction pulley 3, there is no possibility that the portion on the distal end side of the rubber ring 40 is further compressed by the side surfaces 31. Accordingly, it is possible to prevent the generation of an excessively large pushing force on the friction surfaces 41 at the portion on the distal end side of the rubber ring 40 and hence, when the friction pulley returns to the non-power transmission state from the power transmission state, it is possible to prevent the rubber ring 40 from maintaining a state of being pushed into the groove 37.

In the friction pulley 3', the space 38 may be formed continuously from the space 36 in the friction pulley 3. Further, a shape of the space 38 is not limited to a rectangular shape, and any shape may be adopted provided that a shape prevents a space between the pair of side surfaces 31 from being further narrowed toward the inner peripheral side. For example, the space 38 may be a space defined by curved surfaces which are bent.

Next, a friction pulley 4 according to a fourth embodiment of the present invention is described. The friction pulley 4 according to the fourth embodiment of the present invention differs from the friction pulleys 1 to 3 according to the above-mentioned first to third embodiments with respect to a point that a rotary wheel is formed of a plurality of split bodies. The rotary wheel is formed of the plurality of split bodies having a disk shape which extend from the axis x toward an outer periphery, and a groove is formed by making the split bodies overlap with each other in the direction of the axis x. Hereinafter, the description is made in detail.

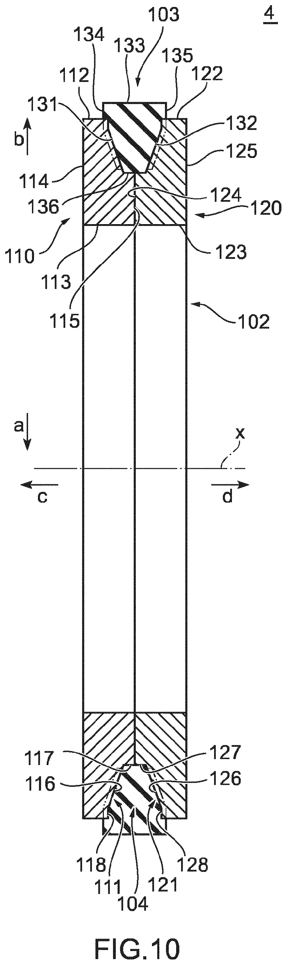

Fig. 10 is a cross-sectional view of the friction pulley 4 according to the fourth embodiment of the present invention showing a cross section along the axis so as to show a schematic configuration of the friction pulley 4, and Fig. 11 is an exploded cross-sectional view of the friction pulley 4 according to the fourth embodiment of the present invention showing a cross section along the axis in a state where respective configurations of the friction pulley 4 are separate from each other. Hereinafter, for the sake of convenience of the description, a direction away from the axis x (see an arrow "b" in Figs. 10 and 11) is taken as a direction toward the outer peripheral side or an outer peripheral direction, and a direction approaching to the axis x (see an arrow "a" in Figs. 10 and 11) is taken as a direction toward the inner peripheral side or an inner peripheral direction. Further, in Figs. 10 and 11, a left side in the direction of the axis x (see an arrow "c" in Figs. 10 and 11) is taken as a front side or a front, and a right side in the direction of the axis x (see an arrow "d" in Figs. 10 and 11) is taken as a rear side or a rear.

As shown in Figs. 10 and 11, the friction pulley 4 includes a base body 102 forming a rotary wheel, and a rubber ring 103 attached at the outer peripheral side of the base body 102. The base body 102 has an outer peripheral surface having an annular shape and, for example, as described later, has a hollow disk shape or a hollow cylindrical shape centered on the axis x. The rubber ring 103 is a member having an annular shape made of rubber, and has an outer peripheral surface having an annular shape. Various materials can be used as a material for forming the base body 102. For example, the base body 102 is made of a resin or metal. Various rubber materials can be used as a rubber material for forming the rubber ring 103, and a rubber material having a physical property that meets the requirement is selected. The rubber material for forming the rubber ring 103 may be, for example, nitrile rubber (NBR), hydrogenated nitrile rubber (H-NBR), ethylene-propylene rubber (EPDM), styrene-butadiene rubber (SBR), natural rubber (NR), or urethane rubber.

The base body 102 includes a front disk 110 and a rear disk 120. The front disk 110 forms a first base body portion (split body) which extends in the outer peripheral direction with respect to the axis x. The rear disk 120 forms a second base body portion (split body) which extends in the outer peripheral direction with respect to the axis x. The front disk 110 has an outer peripheral surface having an annular shape and, on a side surface of the front disk 110 on one side (rear side) in the direction of the axis x, the front disk 110 has a front stepped portion 111 which is a stepped portion having an annular shape extending along the outer peripheral surface. Further, in the same manner, the rear disk 120 has an outer peripheral surface having an annular shape and, on a side surface of the rear disk 120 on one side (front side) in the direction of the axis x, the rear disk 120 has a rear stepped portion 121 which is a stepped portion having an annular shape extending along the outer peripheral surface.

In the base body 102, the side surface of the front disk 110 on one side and the side surface of the rear disk 120 on one side face each other. That is, the side surface of the front disk 110 on the rear side and the side surface of the rear disk 120 on the front side face each other. At a portion of the base body 102 on the outer peripheral side, the front stepped portion 111 of the front disk 110 and the rear stepped portion 121 of the rear disk 120 face each other thus forming a groove 104 having an annular shape. A width of the groove 104 in the direction of the axis x is smaller than a width of the rubber ring 103 in the direction of the axis x so that the rubber ring 103 is compressed and gripped by the groove 104 of the base body 102 such that an outer peripheral surface of the rubber ring 103 is positioned more on the outer peripheral side than the outer peripheral surface of the front disk 110 and the outer peripheral surface of the rear disk 120.

In the base body 102, the front disk 110 and the rear disk 120 are fixed with each other in a non-movable manner in the direction of the axis x, that is, fixed with each other such that the front disk 110 and the rear disk 120 cannot perform relative movement in the direction of the axis x. Further, the front disk 110 and the rear disk 120 are fixed with each other such that the front disk 110 and the rear disk 120 cannot perform relative rotation about the axis x.

To be more specific, as shown in Figs. 10 and 11, the front disk 110 has a shape of a hollow disk, and is defined by the front stepped portion 111, an outer peripheral surface 112, an inner peripheral surface 113, a front-side side surface 114, and a rear-side side surface 115. The outer peripheral surface 112 is a cylindrical surface centered on the axis x. The inner peripheral surface 113 is a cylindrical surface centered on the axis x in the same manner, and extends more on the inner peripheral side than the outer peripheral surface 112, and also extends in the direction of the axis x with a length longer than a length of the outer peripheral surface 112. The front-side side surface 114 is a disk surface or a flat surface having a circular annular shape extending in a direction intersecting with the direction of the axis x, for example, in a direction orthogonal to the axis x (hereinafter also referred to as "radial direction"), and the front-side side surface 114 extends between the outer peripheral surface 112 and the inner peripheral surface 113. The rear-side side surface 115 is a disk surface or a flat surface having a circular annular shape extending in a direction intersecting with the direction of the axis x, for example, in a radial direction, and the rear-side side surface 115 extends between the inner peripheral surface 113 and the front stepped portion 111.

The front stepped portion 111 is recessed toward a front side at a portion disposed on the outer peripheral side of the rear-side side surface 115, and extends between an outer-peripheral-side end of the rear-side side surface 115 and a rear-side end of the outer peripheral surface 112. To be more specific, as shown in Figs. 10 and 11, the front stepped portion 111 of the front disk 110 has a frontward-inclined surface (side surface) 116 forming an inclined surface which is a surface having an annular shape which is inclined. The frontward-inclined surface 116 is formed into a conical surface shape where a diameter increases from the rear side toward the front side in the direction of the axis x. The front stepped portion 111 also includes: a stepped surface 117 which is a surface having an annular shape extending between the rear-side side surface 115 and the frontward-inclined surface 116; and a flange surface 118 which is a surface having an annular shape extending between the frontward-inclined surface 116 and the outer peripheral surface 112. To be more specific, the stepped surface 117 is a cylindrical surface centered on the axis x. Further, to be more specific, the flange surface 118 is a hollow disk surface or a flat surface having a hollow circular annular shape centered on the axis x.

To be more specific, as shown in Figs. 10 and 11, the rear disk 120 has a shape of a hollow disk, and is defined by the rear stepped portion 121, an outer peripheral surface 122 an inner peripheral surface 123, a front-side side surface 124, and a rear-side side surface 125. The outer peripheral surface 122 is a cylindrical surface centered on the axis x. The inner peripheral surface 123 is a cylindrical surface centered on the axis x in the same manner, and extends more on the inner peripheral side than the outer peripheral surface 122, and also extends in the direction of the axis x with a length longer than a length of the outer peripheral surface 122. The front-side side surface 124 is a disk surface or a flat surface having a circular annular shape extending in the direction intersecting with the direction of the axis x, for example, in the radial direction, and extends between the inner peripheral surface 123 and the rear stepped portion 121. The rear-side side surface 125 is a disk surface or a flat surface having a circular annular shape extending in the direction intersecting with the direction of the axis x, for example, in the radial direction, and extends between the outer peripheral surface 122 and the inner peripheral surface 123.

The rear stepped portion 121 is recessed toward a rear side at a portion disposed on the outer peripheral side of the front-side side surface 124, and extends between an outer-peripheral-side end of the front-side side surface 124 and a front side end of the outer peripheral surface 122. To be more specific, as shown in Figs. 10 and 11, the rear stepped portion 121 of the rear disk 120 has a rearward-inclined surface (side surface) 126 forming an inclined surface which is a surface having an annular shape which is inclined. The rearward-inclined surface 126 is formed into a conical surface shape where a diameter increases from the front side toward the rear side in the direction of the axis x. The rear stepped portion 121 also includes a stepped surface 127 which is a surface having an annular shape extending between the front-side side surface 124 and the rearward-inclined surface 126, and a flange surface 128 which is a surface having an annular shape extending between the rearward-inclined surface 126 and the outer peripheral surface 122. To be more specific, the stepped surface 127 is a cylindrical surface centered on the axis x. Further, to be more specific, the flange surface 128 is a hollow disk surface or a flat surface having a hollow circular annular shape centered on the axis x.

In the base body 102, as shown in Fig. 10, the frontward-inclined surface 116 of the front disk 110 faces the rearward-inclined surface 126 of the rear disk 120 thus forming the groove 104 in a substantially V shape. To be more specific, the frontward-inclined surface 116 and the flange surface 118 of the front disk 110 and the rearward-inclined surface 126 and the flange surface 128 of the rear disk 120 face each other in the direction of the axis x thus forming side surfaces of the groove 104 in a substantially V shape. Further, the stepped surface 117 of the front disk 110 and the stepped surface 127 of the rear disk 120 are connected with each other in a coplanar manner along the axis x thus forming a bottom surface of the groove 104 in a substantially V shape on the inner peripheral side. The front stepped portion 111 of the front disk 110 need not have the flange surface 118, and the rear stepped portion 121 of the rear disk 120 need not have the flange surface 128.

In the base body 102, a portion of the groove 104 on the side of the front disk 110 and a portion of the groove 104 on the side of the rear disk 120 are disposed in plane symmetry with respect to a cross section orthogonal to the axis x. Further, the front disk 110 and the rear disk 120 are fixed such that a relative position in the direction of the axis x is non-movable so that a shape of the groove 104 is not deformable. Further, the front disk 110 and the rear disk 120 are fixed with each other such that the front disk 110 and the rear disk 120 cannot perform relative rotation about the axis x. The relative position between the front disk 110 and the rear disk 120 in the direction of the axis x is determined such that widths of the groove 104 in the direction of the axis x at respective points in the radial direction assume predetermined values respectively. The base body 102 includes fixing means not shown in the drawing for making the relative position between the front disk 110 and the rear disk 120 non-movable in the direction of the axis x. As the fixing means, various means including fixing with a bolt may be used. Further, as means for fixing the front disk 110 and the rear disk 120 such that the front disk 110 and the rear disk 120 cannot perform relative rotation about the axis x, various means including fixing with a bolt or locking with a pin or the like may be used.

A width of the groove 104 in the direction of the axis x is set to a value where, in the friction pulley 4, the rubber ring 103 is compressed in the direction of the axis x by a predetermined width (compression margin) in the direction of the axis x so that a contact surface pressure (pushing force) of a predetermined pressure is generated between contact surfaces between the groove 104 and the rubber ring 103, whereby a desired frictional force is generated between the base body 102 and the rubber ring 103.

In the present embodiment, as shown in Fig. 10, the front disk 110 and the rear disk 120 are held and fixed in a state where the rear-side side surface 115 of the front disk 110 is in contact with the front-side side surface 124 of the rear disk 120. The front disk 110 and the rear disk 120 may be held and fixed in a state where the rear-side side surface 115 of the front disk 110 and the front-side side surface 124 of the rear disk 120 are spaced apart from each other in the direction of the axis x with a constant distance therebetween. In this case, a distance between the rear-side side surface 115 of the front disk 110 and the front-side side surface 124 of the rear disk 120 in the direction of the axis x is set to a distance where, in the friction pulley 4, a width of the groove 104 in the direction of the axis x assumes a predetermined width so as to allow the rubber ring 103 to be compressed by the above-mentioned compression margin.

A surface property such as surface roughness or surface hardness or a dimension of the frontward-inclined surface 116 and the flange surface 118 of the front stepped portion 111 of the front disk 110, a surface property such as surface roughness or surface hardness or a dimension of the rearward-inclined surface 126 and the flange surface 128 of the rear stepped portion 121 of the rear disk 120, and an inclination angle or a shape of the frontward-inclined surface 116 and the rearward-inclined surface 126 are set such that a desired frictional force is generated between the base body 102 and the rubber ring 103. The stepped surface 117 of the front disk 110 and the stepped surface 127 of the rear disk 120 may also be set to have a surface property or a shape substantially equal to the surface property or the shape of the frontward-inclined surface 116, the rearward-inclined surface 126, and the flange surfaces 118, 128. In the front stepped portion 111 of the front disk 110, the frontward-inclined surface 116, the stepped surface 117, and the flange surface 118 may respectively have the same surface property, or any one surface out of the frontward-inclined surface 116, the stepped surface 117, and the flange surface 118 may have a different surface property. Alternatively, the frontward-inclined surface 116, the stepped surface 117, and the flange surface 118 may respectively have different surface properties. In the same manner, in the rear stepped portion 121 of the rear disk 120, the rearward-inclined surface 126, the stepped surface 127, and the flange surface 128 may respectively have the same surface property, or any one surface out of the rearward-inclined surface 126, the stepped surface 127, and the flange surface 128 may have a different surface property. Alternatively, the rearward-inclined surface 126, the stepped surface 127, and the flange surface 128 may respectively have different surface properties. For example, the frontward-inclined surface 116, the rearward-inclined surface 126, and the flange surfaces 118, 128 which form the side surfaces of the groove 104 may have a large surface roughness, and the stepped surfaces 117, 127 which form the bottom surface of the groove 104 may have an extremely small surface roughness such as a surface roughness of a mirror surface.

In the base body 102, as shown in Fig. 10, the inner peripheral surface 113 of the front disk 110 and the inner peripheral surface 123 of the rear disk 120 are connected with each other in a coplanar manner along the axis x thus forming a cylindrical surface centered on the axis x. In the base body 102, in a through hole formed by the cylindrical surface formed of the inner peripheral surface 113 of the front disk 110 and the inner peripheral surface 123 of the rear disk 120, in the same manner as the through hole 16 of the above-mentioned friction pulley 1 according to the first embodiment of the present invention, an attaching member or the like of a device or a structure or the like, in which the friction pulley 4 is used, such as a shaft of a motor or an accessory or a member attached to the shaft, is press-fitted or fixed. The fixing is performed by known means not shown in the drawing such as a bolt or a nut. The inner peripheral surface 113 of the front disk 110 and the inner peripheral surface 123 of the rear disk 120 have a shape which conforms to an object on which the friction pulley 4 is attached. The inner peripheral surface 113 of the front disk 110 and the inner peripheral surface 123 of the rear disk 120 may have different shapes. Further, the inner peripheral surface 113 of the front disk 110 and the inner peripheral surface 123 of the rear disk 120 may have a shaft hole formed therein, to which a shaft attached to a device or a structure to which the friction pulley 4 is attached, is attached or inserted through. Further, the front disk 110 may be formed of a solid member having no inner peripheral surface 113. Further, the rear disk 120 may also be formed of a solid member having no inner peripheral surface 123.

The front disk 110 and the rear disk 120 may be formed into the same or similar shape, or may be formed into different shapes.

As shown in Figs. 10 and 11, the rubber ring 103 has a shape which conforms to the groove 104 of the base body 102 on the inner peripheral side. The rubber ring 103 has a front side inclined surface (friction surface) 131 forming a first side surface having a conical surface shape on a side surface thereof on the front side, and has a rear side inclined surface (friction surface) 132 forming a second side surface having a conical surface shape on a side surface thereof on the rear side. Further, the rubber ring 103 also has: an outer peripheral surface (contact surface) 133 having an annular shape; a front-side side surface 134 and a rear-side side surface 135, which extend from a front end and a rear end of the outer peripheral surface 133 toward the inner peripheral side respectively; and an inner peripheral surface (bottom surface) 136 having an annular shape which extends more on the inner peripheral side than the outer peripheral surface. To be more specific, the outer peripheral surface 133 is a cylindrical surface centered on the axis x. The front-side side surface 134 extends between the front end of the outer peripheral surface 133 and an outer-peripheral-side end of the front side inclined surface 131. To be more specific, the front-side side surface 134 is a disk surface or a flat surface having a circular annular shape extending in the radial direction. The rear-side side surface 135 extends between the rear end of the outer peripheral surface 133 and an outer-peripheral-side end of the rear side inclined surface 132. To be more specific, the rear-side side surface 135 is a disk surface or a flat surface having a circular annular shape extending in the radial direction. To be more specific, the inner peripheral surface 136 is a cylindrical surface centered on the axis x, and extends between an inner-peripheral-side end of the front side inclined surface 131 and an inner-peripheral-side end of the rear side inclined surface 132. As described above, the rubber ring 103 is defined by the front side inclined surface 131, the rear side inclined surface 132, the outer peripheral surface 133, the front-side side surface 134, the rear-side side surface 135, and the inner peripheral surface 136.

As described above, the rubber ring 103 has a shape which conforms to the groove 104 of the base body 102 on the inner peripheral side. The front side inclined surface 131 and the front-side side surface 134 respectively correspond to the frontward-inclined surface 116 and the flange surface 118 of the front disk 110 which form the side surface of the groove 104 on the front side. The rear side inclined surface 132 and the rear-side side surface 135 respectively correspond to the rearward-inclined surface 126 and the flange surface 128 of the rear disk 120 which form the side surface of the groove 104 on the rear side. The inner peripheral surface 136 corresponds to the stepped surfaces 117 and 127 forming the bottom surface of the groove 104. To be more specific, as shown in Fig. 11, on the basis of the axis x, the front side inclined surface 131 of the rubber ring 103 extends parallel to the frontward-inclined surface 116 of the front disk 110. Further, the rear side inclined surface 132 of the rubber ring 103 extends parallel to the rearward-inclined surface 126 of the rear disk 120.

The rubber ring 103 is set such that, at a portion of the front side inclined surface 131 and the rear side inclined surface 132, widths in the direction of the axis x at respective points in the radial direction respectively have a constant compression margin with respect to the groove 104.

A width of the groove 104 in the direction of the axis x is set to a value where, in the friction pulley 4, the rubber ring 103 is uniformly compressed along the front side inclined surface 131 and the rear side inclined surface 132 by a predetermined width (compression margin) in the direction of the axis x so that a contact surface pressure of a predetermined pressure is generated between contact surfaces between the groove 104 and the rubber ring 103 whereby a desired frictional force is generated between the base body 102 and the rubber ring 103.

As shown in Fig. 10, in the friction pulley 4, a portion of the rubber ring 103 on the inner peripheral side is gripped and compressed by the groove 104 of the base body 102. The front side inclined surface 131 is pressed to the frontward-inclined surface 116 of the front disk 110 thus being in pressure contact with the frontward-inclined surface 116. The rear side inclined surface 132 is pressed to the rearward-inclined surface 126 of the rear disk 120 thus being in pressure contact with the rearward-inclined surface 126. The inner peripheral surface 136 is pressed to the stepped surfaces 117 and 127 of the front disk 110 and the rear disk 120 thus being in pressure contact with the stepped surfaces 117 and 127.

In assembling the friction pulley 4, as shown in Fig. 11, the front disk 110 and the rear disk 120 are made to approach each other in the direction of the axis x so that the frontward-inclined surface 116 of the front disk 110 is brought into contact with the front side inclined surface 131 of the rubber ring 103, and the rearward-inclined surface 126 of the rear disk 120 is brought into contact with the rear side inclined surface 132 of the rubber ring 103 whereby the rubber ring 103 is compressed in the direction of the axis x. Then, when the rear-side side surface 115 of the front disk 110 and the front-side side surface 124 of the rear disk 120 are brought into contact with each other, the rubber ring 103 is compressed by a compression margin of a desired width so that a desired frictional force is generated between the rubber ring 103 and the base body 102. A frictional force is mainly generated between the frontward-inclined surface 116 of the front disk 110 and the front side inclined surface 131 of the rubber ring 103, between the rearward-inclined surface 126 of the rear disk 120 and the rear side inclined surface 132 of the rubber ring 103, and between the bottom surface of the groove 104 (the stepped surfaces 117 and 127 of the front disk 110 and the rear disk 120) and the inner peripheral surface 136 of the rubber ring 103.

As shown in Fig. 10, in the friction pulley 4, the portion of the rubber ring 103 on the outer peripheral side projects toward the outer peripheral side from the outer peripheral surface of the base body 102, and the outer peripheral surface 133 of the rubber ring 103 is positioned more on the outer peripheral side than the outer peripheral surface of the base body 102 (the outer peripheral surfaces 112, 122 of the front disk 110 and the rear disk 120). With such a configuration, the outer peripheral surface 133 of the rubber ring 103 of the friction pulley 4 can abut on a side surface of the rotary member R (see Fig. 1(a)) such as a belt or a pulley which is rotationally driven. Accordingly, the outer peripheral surface 133 of the rubber ring 103 of the friction pulley 4 is pressed to a side surface of the rotary member R so that, by a frictional force generated between the outer peripheral surface 133 and the side surface of the rotary member R, power can be transmitted between the friction pulley 4 and the rotary member R.

As described above, in the friction pulley 4 according to the embodiment of the present invention, the rubber ring 103 is gripped in the groove 104 of the base body 102 in a state of being compressed between the front disk 110 and the rear disk 120. Accordingly, in the same manner as the advantageous effect achieved by the above-mentioned friction pulleys 1 to 3 according to the first to third embodiments of the present invention, a frictional force can be generated on a contact surface between the rubber ring 103 and the groove 104. By increasing a compression margin of the rubber ring 103, a frictional force generated on the contact surface between the rubber ring 103 and the groove 104 can be increased. Accordingly, it is possible to increase a load in the direction along the outer peripheral surface 133 of the rubber ring 103 which the rubber ring 103 can receive without causing slip with respect to the base body 102 and hence, a torque which the friction pulley 4 can transmit can be increased compared to the prior art. Further, a frictional force generated on the contact surface between the rubber ring 103 and the groove 104 can be made greater as compared to an adhesive force acquired by an adhesive agent.

Further, the base body 102 and the rubber ring 103 generate a frictional force in such a manner that the frontward-inclined surface 116 and the rearward-inclined surface 126 which incline and the front side inclined surface 131 and the rear side inclined surface 132 which incline are respectively brought into contact with each other. Accordingly, a contact surface between the base body 102 and the rubber ring 103 can be increased so that a frictional force generated on the contact surface between the base body 102 and the rubber ring 103 can be further increased.

Further, by sandwiching the rubber ring 103 between the front disk 110 and the rear disk 120, the friction pulley 4 can be assembled without performing adhering treatment, secondary vulcanization treatment or a pulling step. Accordingly, even when a rubber material for forming the rubber ring 103 has any property such as hardness or stretchiness, or has any shape, without additionally performing treatment on the rubber ring 103, the friction pulley 4 can be easily prepared by merely sandwiching the rubber ring 103 between the front disk 110 and the rear disk 120.

Further, a compression margin of the rubber ring 103 can be easily adjusted so that, in the friction pulley 4, a magnitude of a slip torque, at which the rubber ring 103 starts to slip with respect to the base body 102, can be easily adjusted. Accordingly, by setting a slip torque in accordance with a device to which the friction pulley 4 is attached, it is possible to prevent an excessively large torque from being applied to the device whereby the device to which the friction pulley 4 is attached can be prevented from being damaged. The same applies for the above-mentioned friction pulleys 1 to 3, 3' according to the first to third embodiments of the present invention.

In the friction pulley 4, the rubber ring 103 is not adhered to the base body 102. The type of rubber material which can be used for forming the rubber ring 103 is not limited for ensuring adhesion strength, and hence, the rubber ring 103 can be prepared using various rubber materials, thus increasing the choices for a rubber material for forming the rubber ring 103. The same applies for the above-mentioned friction pulleys 1 to 3, 3' according to the first to third embodiments of the present invention.

Further, in the friction pulley 4, the rubber ring 103 is not adhered to the base body 102 so that an adhering step is unnecessary and hence, a manufacturing step can be simplified whereby productivity can be enhanced. The same applies for the above-mentioned friction pulleys 1 to 3, 3' according to the first to third embodiments of the present invention.

Further, in the friction pulley 4, a frictional force generated between the rubber ring 103 and the groove 104 of the base body 102 is determined depending on a physical property of a rubber material used for forming the rubber ring 103 or a surface property of the groove 104. Accordingly, by inspecting a physical property of the rubber material or a surface property of the groove 104 in advance, the quality of the friction pulley 4 can be inspected without breaking down the friction pulley 4. In a friction pulley where a rubber ring and a base body are adhered to each other by an adhesive agent, when there is an adhesion failure, cracks in the rubber ring develop at an early stage from such a portion where the rubber ring and the base body are not adhered to each other thus leading to breakage of the rubber ring. Accordingly, in the friction pulley where the rubber ring and the base body are adhered to each other by the adhesive agent, detection of an adhesion failure is important. However, inspection of a friction pulley without splitting the friction pulley has been difficult. On the other hand, the friction pulley 4 according to the embodiment of the present invention can be inspected without breaking down the friction pulley 4 so that a quality control of the friction pulley 4 can be easily performed. The same applies for the above-mentioned friction pulleys 1 to 3, 3' according to the first to third embodiments of the present invention.

A shape of the groove 104 of the base body 102 is not limited to the above-mentioned substantially V shape. For example, the frontward-inclined surface 116 of the front stepped portion 111 of the front disk 110 and the rearward-inclined surface 126 of the rear stepped portion 121 of the rear disk 120 need not have a conical surface shape, but may have a shape having a curved profile in cross section along the axis x. In the same manner, a shape of the rubber ring 103 is also not limited to a substantially V shape corresponding to the groove 104 of the base body 102. For example, the front side inclined surface 131 and the rear side inclined surface 132 of the rubber ring 103 need not have a conical surface shape, but may have a shape having a curved profile in cross section taken the axis x. Further, a cross-sectional shape of the groove 104 of the base body 102 may be a U shape, a rectangular shape or a circular shape. In the same manner, a cross-sectional shape of the rubber ring 3 may be a U shape, a rectangular shape or a circular shape. The shapes of the rubber ring 103 and the groove 104 may be respectively the shapes of the rubber rings 20, 40 and the grooves 11, 30, 35, 37 included in the above-mentioned friction pulley 1 to 3, 3'.

Further, the front disk 110 and the rear disk 120 need not have the stepped surfaces 117, 127 respectively. In this case, in the base body 102, the front disk 110 and the rear disk 120 are fixed with each other with a predetermined distance therebetween in the direction of the axis x so that the rubber ring 103 is gripped by the groove 104 with the above-mentioned predetermined compression margin being compressed. Accordingly, the front side inclined surface 131 of the rubber ring 103 is brought into pressure contact with the frontward-inclined surface 116 of the front disk 110, and the rear side inclined surface 132 of the rubber ring 103 is brought into pressure contact with the rearward-inclined surface 126 of the rear disk 120, and a desired frictional force is generated between the base body 102 and the rubber ring 103.

As described above, according to the friction pulley 4 of the fourth embodiment of the present invention, a high torque can be transmitted.

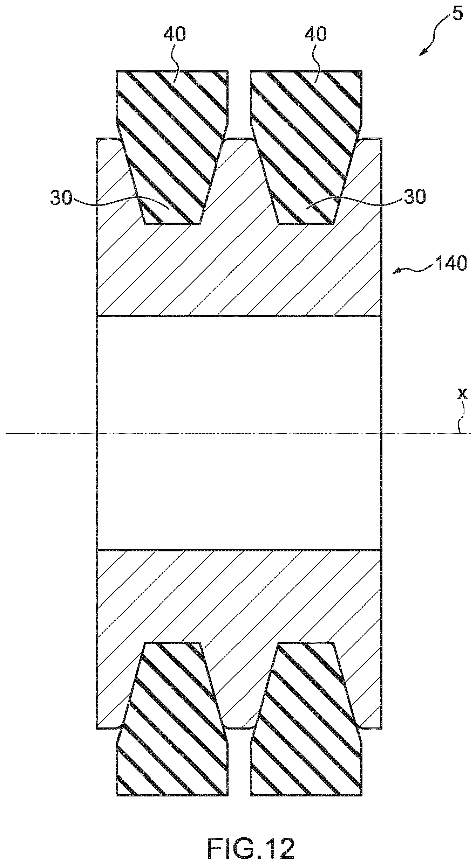

Next, a friction pulley 5 according to a fifth embodiment of the present invention is described. Fig. 12 is a view showing a schematic configuration of the friction pulley 5 according to the fifth embodiment of the present invention, and is also a cross-sectional view of the friction pulley 5 showing a cross section along the axis. The friction pulley 5 according to the fifth embodiment of the present invention includes a rotary wheel 140 different from the rotary wheel 10 of the above-mentioned friction pulley 2 according to the second embodiment of the present invention. Hereinafter, the description of configurations identical or similar to the configurations of the above-mentioned friction pulley 2 according to the second embodiment of the present invention is omitted, and only configurations which make the present embodiment different from the second embodiment are described.

As shown in Fig. 12, the rotary wheel 140 of the friction pulley 5 has two grooves 30 formed parallel to each other in the direction of the axis x. The friction pulley 5 includes two rubber rings 40 respectively accommodated in the two grooves 30.

According to the friction pulley 5 of the fifth embodiment of the present invention, in addition to the advantageous effects achieved by the above-mentioned friction pulley 2 according to the second embodiment of the present invention, it is possible to transmit greater power using the two rubber rings 40. Further, with the provision of the two rubber rings 40, a force applied to the friction pulley 5 can be dispersed so that a force applied to the respective rubber rings 40 can be reduced, thus leading to a reduction of a stress generated on the respective rubber rings 40. Accordingly, durability of the friction pulley 5 can be enhanced.

The rotary wheel 140 of the friction pulley 5 may have a plurality of three or more grooves 30 formed parallel to each other in the direction of the axis x. The friction pulley 5 may include a plurality of rubber rings 40 which are respectively accommodated in the plurality of grooves 30 with the number of rubber rings 40 being equal to the number of grooves 30. Further, the rotary wheel 140 of the friction pulley 5 may have the grooves 11, 35, 37 of the above-mentioned friction pulleys 1, 3, 3' in place of the grooves 30. Further, the rotary wheel 140 of the friction pulley 5 may include the rubber rings 20 of the above-mentioned friction pulley 1 in place of the rubber rings 40.

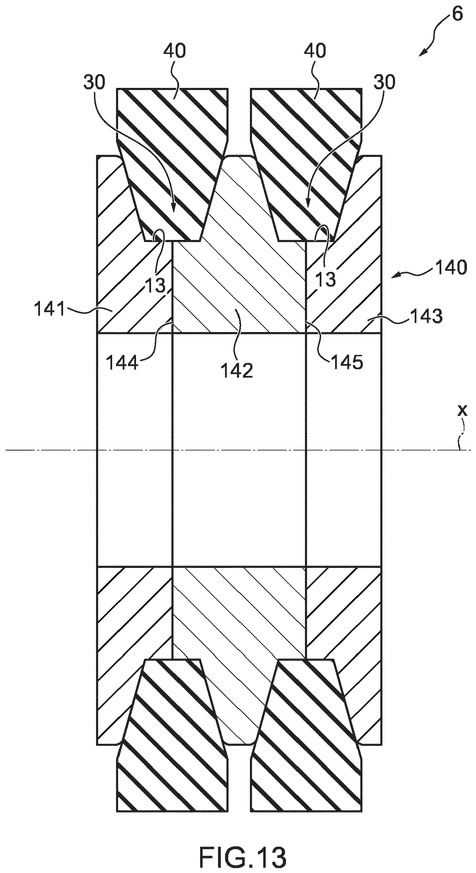

Further, the rotary wheel 140 of the friction pulley 5 may be formed by making a plurality of disks forming split bodies overlap with each other as in the case of the above-mentioned friction pulley 4. For example, as shown in Fig. 13, a rotary wheel 140 of a friction pulley 6 which is a modification of the friction pulley 5 may be formed by making a side disk 141, a center disk 142, and a side disk 143 forming three split bodies overlap with each other in the direction of the axis x as in the case of the above-mentioned friction pulley 4 shown in Fig. 10. A joining surface 144 between the side disk 141 and the center disk 142 divides a bottom surface 13 of a groove 30 on one side (the left side in Fig. 13) on the outer peripheral side, for example. In the same manner, a joining surface 145 between the side disk 143 and the center disk 142 divides a bottom surface 13 of a groove 30 on one side (the right side in Fig. 13) on the outer peripheral side, for example.

The rotary wheel 140 of the friction pulley 6 may have a plurality of three or more grooves 30. In this case, corresponding to the number of grooves 30, the friction pulley 6 includes rubber rings 40 of the number equal to the number of grooves 30, and also includes disks of the number which relates to the number of grooves 30. The disks disposed adjacently to each other divides the bottom surface 13 of each groove 30. Further, the side disk 141 and the center disk 142 may have stepped portions which are made to overlap with each other. The side disk 143 and the center disk 142 may also have stepped portions which are made to overlap with each other. With the provision of such stepped portions, the side disks 141, 143 and the center disk 142 can be easily positioned.

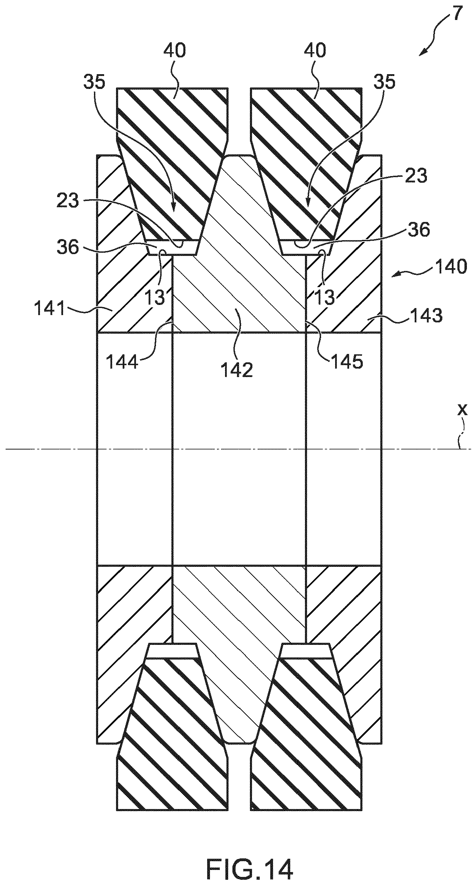

Further, the friction pulley 6 which is a modification of the above-mentioned friction pulley 5 may have grooves in another embodiment in place of the grooves 30 as described above. For example, as shown in Fig. 14, in a friction pulley 7 which is a modification of the friction pulley 5, in the same manner as the friction pulley 6, a rotary wheel 140 is formed by making a side disk 141, a center disk 142, and a side disk 143 forming three split bodies overlap with each other in the direction of the axis x. Further, the rotary wheel 140 has two grooves 35 of the above-mentioned friction pulley 3 according to the third embodiment of the present invention (see Fig. 8) in place of the two grooves 30. As shown in Fig. 14, in the friction pulley 7, a joining surface 144 between the side disk 141 and the center disk 142 divides a bottom surface 13 of the groove 35 on one side (the left side in Fig. 14) on the outer peripheral side, for example. In the same manner, a joining surface 145 between the side disk 143 and the center disk 142 divides a bottom surface 13 of the groove 35 on one side (the right side in Fig. 14) on the outer peripheral side, for example. Further, in a non-power transmission state, in each groove 35, a bottom surface 23 of the rubber ring 40 does not abut on the bottom surface 13, and a space 36 having an annular shape is formed between the bottom surface 13 of the groove 35 and the bottom surface 23 of the rubber ring 40. In the same manner as the above-mentioned friction pulley 6, the rotary wheel 140 of the friction pulley 7 may have a plurality of three or more grooves 35. Further, the side disk 141 and the center disk 142 may have stepped portions which are made to overlap with each other. The side disk 143 and the center disk 142 may also have stepped portions which are made to overlap with each other.

In the above-mentioned friction pulleys 1, 2, 3, 3', 4, 5, 6, 7, a core wire having an annular shape may be embedded in the rubber rings 20, 40, 103. The core wire is, for example, an endless wire made of metal or a resin material. By embedding the core wire in the rubber ring, stretching of the rubber rings 20, 40, 103 can be suppressed and hence, the generation of deflection of the rubber rings 20, 40, 103 can be suppressed. Further, it is possible to suppress the generation of a tensile strain in the extension direction of the rubber rings 20, 40, 103 in the rubber rings 20, 40, 103 and hence, durability of the rubber rings 20, 40, 103 can be enhanced.

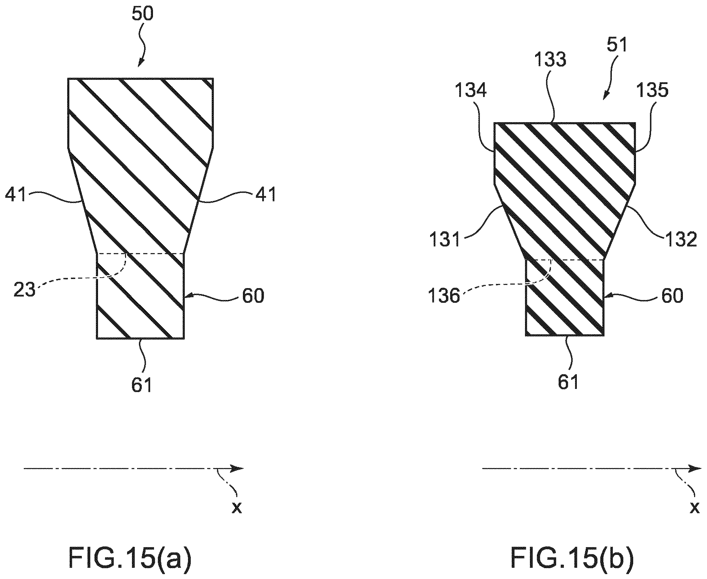

Further, in the above-mentioned friction pulley, as shown in Figs. 15(a) and 15(b), each of the rubber rings 40, 103 may include a rib 60 having an annular shape, which is formed so as to extend toward the inner peripheral side, on the bottom surface 23 or the inner peripheral surface 136 thereof. The rib 60 is an annular portion having a circular annular shape centered on the axis x and, for example, is a portion having a hollow disk shape centered on the axis x. A shape and a size of the rib 60 are set corresponding to a shape of a groove of a rotary wheel of a friction pulley. Alternatively, a shape and a size of a groove of a rotary wheel of a friction pulley are set corresponding to a shape and a size of the rib 60. As a size of the rib 60, for example, respective dimensions of the rib 60 are set such that the rib 60 has a dimension in the radial direction, and a space is formed between an end surface (inner peripheral end surface 61) of the rib 60 on the inner peripheral side and a bottom surface of the groove of the rotary wheel, or the inner peripheral end surface 61 of the rib 60 and the bottom surface of the groove of the rotary wheel are in contact with each other. Further, for example, a width of the rib 60 in the direction of the axis x is uniform or substantially uniform.

For example, as shown in Fig. 15(a), on a rubber ring 50 which is a modification of the rubber ring 40, a rib 60 is formed so as to project from a bottom surface 23 toward the inner peripheral side, wherein the rib 60 has a rectangular or substantially rectangular cross-sectional shape, and a width of the rib 60 in the direction of the axis x is equal to or substantially equal to the bottom surface 23. In the rubber ring 50, the width of the rib 60 in the direction of the axis x may be narrower than a width of the bottom surface 23 in the direction of the axis x. Further, for example, as shown in Fig. 15(b), on a rubber ring 51 which is a modification of the rubber ring 103, a rib 60 is formed so as to project from an inner peripheral surface 136 toward the inner peripheral side, wherein the rib 60 has a rectangular or substantially rectangular cross-sectional shape, and a width of the rib 60 in the direction of the axis x is equal to or substantially equal to a width of the inner peripheral surface 136. In the rubber ring 51, the width of the rib 60 in the direction of the axis x may be narrower than the width of the inner peripheral surface 136 in the direction of the axis x.

The rubber rings 50 and 51, on which the rib 60 is formed, can increase a geometrical moment of inertia so that bending strain of the rubber rings 50 and 51 which is generated due to a bending moment can be reduced. Accordingly, in the power transmission state, it is possible to suppress the generation of deflection on the rubber rings 50 and 51. For this reason, expansion and contraction or the repeated deformation of the rubber rings 50 and 51 can be suppressed. Alternatively, an amount of deformation of the rubber rings 50 and 51 caused when the rubber rings 50 and 51 expands and contracts or an amount of deformation of the rubber rings 50 and 51 caused when the rubber rings 50 and 51 repeatedly deforms can be reduced. Accordingly, it is possible to suppress heat generated in the rubber rings 50 and 51 when power is transmitted. Further, the rib 60 extends from the bottom surface 23 or the inner peripheral surface 136 so that the rubber rings 40 and 103 can be reinforced without adversely affecting the friction surfaces 41, the front side inclined surface 131, and the rear side inclined surface 132 of the rubber rings 50 and 51, that is, without adversely affecting a function of transmitting a force between the rubber rings 50 and 51 and the rotary wheels 1 and, 140.

It is preferable that the rubber rings 50 and 51 be used for the rotary wheels 10, 102 and 140 having a groove shape (grooves 35 and 37) where a space (spaces 36 and 38) is formed between the groove and the bottom surface 23 or the inner peripheral surface 136 of the rubber rings 40 and 103. In the above-mentioned rubber rings 50 and 51, parts having functions identical or similar to the corresponding parts of the above-mentioned rubber rings 40 and 103 are given the same symbols.

Further, in the above-mentioned friction pulley, as shown in Figs. 16(a) to 16(d), both corner portions of the rubber rings 20, 40, and 103 on the outer peripheral side may be cut out so that escape portions may be formed so as to form gaps between the rubber ring and the groove of the rotary wheel. A shape of the escape portion may be a shape formed by angular chamfering a corner portion, a shape formed by round chamfering a corner portion or the like. In a friction pulley which includes a rubber ring having the escape portions, in the power transmission state, even when the rubber ring is pressed toward the inner peripheral side thus deforming, a situation shown in Figs. 4 and 7 does not occur where both corner portions of the rubber ring on the outer peripheral side are pushed out in the direction of the axis while protruding from the groove, and the rubber ring deforms in the groove. For this reason, it is possible to prevent a situation where the rubber ring is pressed to end portions of a groove on the upper side thus causing stress concentration at portions of the rubber ring pressed to the end portions of the groove.

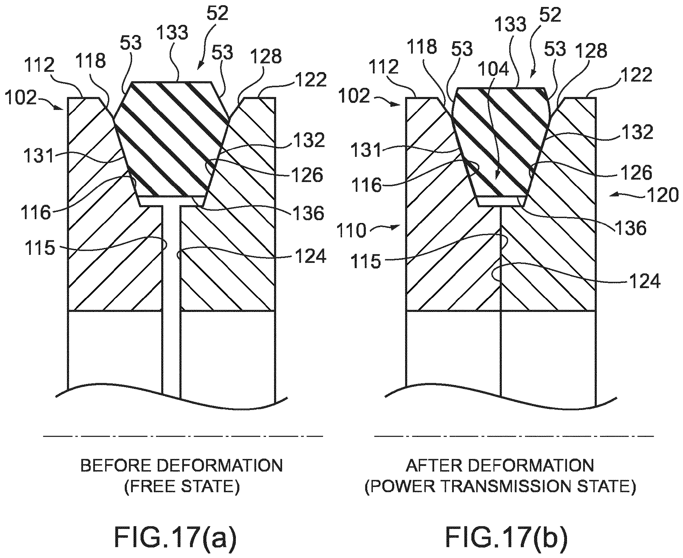

For example, as shown in Fig. 16(a), in a rubber ring 52 which is a modification of the rubber ring 103, both corner portions of the rubber ring 52 on the outer peripheral side, which are respectively formed between the outer peripheral surface 133 of the rubber ring 103 and the front-side side surface 134 and between the outer peripheral surface 133 of the rubber ring 103 and the rear-side side surface 135, are cut out thus forming escape portions 53. The escape portions 53 may be formed on the inner peripheral side so as to respectively intersect with the front side inclined surface 131 and the rear side inclined surface 132, or may be formed so as to respectively intersect with the front-side side surface 134 and the rear-side side surface 135. In Fig. 16(a), the escape portions 53 are illustrated, which are respectively formed so as to intersect with the front side inclined surface 131 and the rear side inclined surface 132. The escape portions 53 are formed such that, in a state where the rubber ring 52 is accommodated in the groove 104 of the base body 102 forming a rotary wheel, intersecting portions 53a, which are portions where the escape portions 53 respectively intersect with the front side inclined surface 131 and the rear side inclined surface 132, are respectively positioned at positions in the radial direction where the frontward-inclined surface 116 and the rearward-inclined surface 126 of the groove 104 extend. Accordingly, as shown in Fig. 17(b), in the power transmission state, even when the rubber ring 52 is pressed toward the inner peripheral side thus deforming, a situation does not occur where corner portions of the rubber ring 52 on the outer peripheral side are pushed out in the direction of the axis x while protruding from the groove 104, and the rubber ring 52 deforms in the groove 104. For this reason, it is possible to prevent a situation where the rubber ring 52 is respectively pressed to an end portion of the groove 104 on the outer peripheral side where the outer peripheral surface 112 and the flange surface 118 intersect with each other and to an end portion of the groove 104 on the outer peripheral side where the outer peripheral surface 122 and the flange surface 128 intersect with each other thus causing stress concentration at portions of the rubber ring 52 pressed to the end portions of the groove 104. Accordingly, cracks or breakage of the rubber ring 52 can be prevented. Provided that, in the power transmission state, the rubber ring 52 is not pushed out in the direction of the axis x while protruding from the groove 104, and the rubber ring 52 deforms in the groove 104, the intersecting portions 53a of the rubber ring 52 may be respectively positioned within a range in the radial direction where the flange surfaces 118, 128 extend.

For example, as shown in Fig. 16(a), the escape portion 53 has a conical surface shape or a substantially conical surface shape, which extends, in cross section, in a linear shape or a substantially linear shape, and is centered or substantially centered on the axis x. A shape of the escape portion 53 is not limited to a conical surface shape or a substantially conical surface shape, and the escape portion 53 may have a surface having an annular shape, which extends, in cross section, in a circular arc shape, an arc shape, or another curved shape, and is centered or substantially centered on the axis x. When a shape of the escape portion 53 in cross section is a curved shape, a shape of the escape portion 53 in cross section may be a shape such as a round chamfered shape or a gradually changing round shape as shown in Fig. 16(b) where a curvature of a circular arc gradually varies smoothly.

In the front disk 110 and the rear disk 120, as shown in Fig. 17(a), the flange portions 118 and 128 may be formed into a tapered surface which extends toward the outside of the groove 104. The tapered surface may be a curved surface such as a surface having a trumpet shape, or may be a conical surface or a substantially conical surface. As shown in Fig. 17(b), when the flange portions 118 and 128 is formed into a tapered surface, in the power transmission state, it is possible to increase a space where end portions of the rubber ring 53 on the outer peripheral side extend in the groove 104 toward the outside of the groove 104 in the direction of the axis x. Accordingly, it is preferable for the flange portions 118 and 128 to be formed into a tapered surface. Further, it is preferable that the front side inclined surface 131 is smoothly connected to the flange portion 118, and the rear side inclined surface 132 is smoothly connected to the flange portion 128.

Further, for example, as shown in Fig. 16(c), in a rubber ring 54 which is a modification of the rubber ring 20, both corner portions of the rubber ring 20 on the outer peripheral side, which are respectively formed between the contact surface 21 of the rubber ring 20 and the friction surfaces 22, are cut out thus forming escape portions 55. The escape portions 55 are formed such that, in a state where the rubber ring 54 is accommodated in the groove 11 of the rotary wheel 10, intersecting portions 55a each of which is a portion where the escape portion 55 intersects with the friction surface 22, are positioned at positions in the radial direction where the side surfaces 12 of the groove 11 extend. Accordingly, in the same manner as the above-mentioned rubber ring 52, in the power transmission state, even when the rubber ring 54 is pressed toward the inner peripheral side thus deforming, a situation does not occur where both corner portions of the rubber ring 54 on the outer peripheral side are pushed out in the direction of the axis x while protruding from the groove 11, and the rubber ring 54 deforms in the groove 11. For this reason, it is possible to prevent a situation where the rubber ring 54 is pressed to the transition portions 15 thus causing stress concentration at portions of the rubber ring 54 pressed to the transition portions 15. As described above, in addition to the advantageous effect of the transition portion 15, the advantageous effect of the escape portion 55 can be also acquired and hence, an effect of preventing cracks or breakage of the rubber ring 54 can be further increased.

In the same manner as the escape portion 53 of the above-mentioned rubber ring 52, for example, the escape portion 55 has a conical surface shape or a substantially conical surface shape centered or substantially centered on the axis x. Further, in the same manner as the above-mentioned escape portion 53, a shape of the escape portion 55 may be formed into a surface having an annular shape, which extends, in cross section, in a circular arc shape, an arc shape, or another curved shape, and is centered or substantially centered on the axis x, such as a round chamfered shape or a gradually changing round shape.

Further, for example, as shown in Fig. 16(d), in a rubber ring 56 which is a modification of the rubber ring 40, both corner portions of the rubber ring 40 on the outer peripheral side, which are respectively formed between the contact surface 21 of the rubber ring 40 and the friction surfaces 41, are cut out thus forming escape portions 57. The escape portions 57 are formed such that, in a state where the rubber ring 56 is accommodated in the grooves 30, 35, and 37 of the rotary wheels 10 and 140, intersecting portions 57a each of which is a portion where the escape portion 57 intersects with the friction surface 41, are respectively positioned within a range in the radial direction where the side surfaces 31 of the grooves 30, 35, and 37 extend. Accordingly, in the power transmission state, even when the rubber ring 56 is pressed toward the inner peripheral side and deformed, a situation does not occur where both corner portions of the rubber ring 56 on the outer peripheral side are pushed out in the direction of the axis x while protruding from the grooves 30, 35, and 37, and the rubber ring 56 deforms in the grooves 30, 35, and 37. For this reason, it is possible to prevent a situation where the rubber ring 56 is pressed to the transition portions 15 thus causing stress concentration at portions of the rubber ring 56 pressed to the transition portions 15. As described above, in addition to the advantageous effect of the transition portion 15, the advantageous effect of the escape portion 57 can be also achieved, and hence, an effect of preventing cracks or breakage of the rubber ring 56 can be further increased.

In the same manner as the escape portion 53 of the above-mentioned rubber ring 52, for example, the escape portion 56 has a conical surface shape or a substantially conical surface shape centered or substantially centered on the axis x. Further, in the same manner as the above-mentioned escape portion 53, a shape of the escape portion 56 may have a surface having an annular shape, which extends, in cross section, in a circular arc shape, an arc shape, or another curved shape, and is centered or substantially centered on the axis x, such as a round chamfered shape or a gradually changing round shape.

In the above-mentioned rubber rings 52, 54, and 56, parts having functions identical or similar to the corresponding parts of the above-mentioned rubber rings 103, 20, and 40 are given the same symbols.

Although preferred embodiments of the present invention have been described heretofore, the present invention is not limited to the friction pulleys according to the above-mentioned embodiments, and includes any mode which falls within the concept and Claims of the present invention. Further, respective configurations may be selectively combined as desired such that the above-mentioned advantageous effects can be at least partially achieved. For example, a shape, a material, an arrangement, a size or the like of respective constitutional elements of the above-mentioned embodiments is changeable as desired according to a specific use mode of the present invention.

### List of Reference Signs

1, 2, 3, 3', 4, 5, 6, 7 friction pulley
10, 140 rotary wheel
11, 30, 35, 37, 104 groove
12, 31 side surface
13 bottom surface
14, 112, 122 outer peripheral surface
15 transition surface
16 through hole
17, 113, 123 inner peripheral surface
20, 40, 50, 51, 52, 54, 56, 103 rubber ring
21 contact surface
22, 41 friction surface
23 bottom surface
36, 38 space
42 projecting surface
53, 55, 57 escape portion
53a, 55a, 57a intersecting portion
60 rib
61 inner peripheral end surface
102 base body
110 front disk
111 front stepped portion
114, 124 front-side side surface
115, 125 rear-side side surface
116 frontward-inclined surface
117, 127 stepped surface
120 rear disk
121 rear stepped portion
126 rearward-inclined surface
131 front side inclined surface
132 rear side inclined surface
133 outer peripheral surface
134 front-side side surface
135 rear-side side surface
136 inner peripheral surface
141, 143 side disk
142 center disk
144, 145 joining surface
d0, d1, d2, d3, d4 distance
f pressing force
p, p1 pushing force
x axis

## Claims

1. A friction pulley for transmitting power in a state where an outer periphery of the friction pulley is in pressure contact with a rotary member which rotates, the friction pulley being **characterized by** comprising:
a rotary wheel having a groove on an outer periphery of the rotary wheel, the groove being recessed toward an inner periphery side, the rotary wheel being rotatable about an axis; and
a rubber ring having an annular shape and being made of rubber, the rubber ring being formed so as to be capable of being accommodated in the groove of the rotary wheel, wherein
the groove has a pair of side surfaces facing each other in a direction of the axis, each of the pair of side surfaces having an annular shape and extending from an inner peripheral side toward an outer peripheral side, and
the rubber ring is accommodated in the groove, and has a contact surface at an outer periphery of the rubber ring and friction surfaces that are a pair of surfaces corresponding to the pair of side surfaces of the groove, the contact surface being configured to be brought into pressure contact with the rotary member so as to transmit power, and, at least in a power transmission state where the contact surface is in pressure contact with the rotary member so as to transmit power, the friction surfaces of the rubber ring are pushed against the side surfaces of the groove.

2. The friction pulley according to claim 1, **characterized in that**, also in a non-power transmission state where the contact surface is not in pressure contact with the rotary member, the rubber ring is accommodated in the groove with the friction surfaces being pushed against the side surfaces of the groove.

3. The friction pulley according to claim 2, **characterized in that**, in a state where the rubber ring is not accommodated in the groove, a distance between the friction surfaces of the rubber ring is at least partially greater than a distance between the corresponding side surfaces of the groove, and the rubber ring is accommodated in the groove in a state of being pressed against the side surfaces of the groove.

4. The friction pulley according to any one of claims 1 to 3, **characterized in that**
the groove has a bottom surface extending between the side surfaces on the inner peripheral side, and a distance between the side surfaces is constant, and
the rubber ring has a bottom surface which is a surface extending between the friction surfaces on the inner peripheral side, a distance between the friction surfaces is constant in a state where the rubber ring is not accommodated in the groove, and the bottom surface of the rubber ring abuts on the bottom surface of the groove.

5. The friction pulley according to any one of claims 1 to 3, **characterized in that**
the groove has a bottom surface extending between the side surfaces on the inner peripheral side, and a distance between the pair of side surfaces increases from the inner peripheral side toward the outer peripheral side, and
the rubber ring has a bottom surface which is a surface extending between the friction surfaces on the inner peripheral side, a distance between the friction surfaces increases from the inner peripheral side toward the outer peripheral side in a state where the rubber ring is not accommodated in the groove, and the bottom surface of the rubber ring abuts on the bottom surface of the groove.

6. The friction pulley according to any one of claims 1 to 3, **characterized in that**
the groove has a bottom surface extending between the side surfaces on the inner peripheral side, and a distance between the pair of side surfaces increases from the inner peripheral side toward the outer peripheral side,
the rubber ring has a bottom surface which is a surface extending between the friction surfaces on the inner peripheral side, and a distance between the friction surfaces increases from the inner peripheral side toward the outer peripheral side in a state where the rubber ring is not accommodated in the groove, and
in the non-power transmission state where the contact surface is not in pressure contact with the rotary member, a space is formed between the bottom surface of the rubber ring and the bottom surface of the groove.

7. The friction pulley according to claim 5 or 6, **characterized in that** each of the friction surface and the side surface is a conical surface.

8. The friction pulley according to any one of claims 1 to 7, **characterized in that**
the friction pulley includes a plurality of the rubber rings, and
the rotary wheel includes a plurality of the grooves, the number of the plurality of the grooves being equal to the number of the plurality of the rubber rings, and the plurality of the rubber rings are accommodated in the plurality of the grooves, respectively.

9. The friction pulley according to any one of claims 1 to 8, **characterized in that** the rotary wheel is formed of a plurality of disk shaped split bodies extending from the axis toward the outer periphery, and the groove is formed by making the split bodies overlap with each other in the direction of the axis.
